# EUROPÄISCHE PATENTSCHRIFT

(11) **EP 2 936 986 B1**
(45) Veröffentlichungstag und Bekanntmachung des Hinweises auf die Patenterteilung: **13.06.2018**
(21) Anmeldenummer: 15162431.9
(22) Anmeldetag: 02.04.2015
(51) Int. Cl.: A22C 17/00, A23N 15/00

(54) **SCHASCHLIKMASCHINE UND VERFAHREN ZUM HERSTELLEN VON SCHASCHLIKSPIESSEN**
SKEWER MACHINE AND METHOD FOR THE PRODUCTION OF SHASHLIKS
MACHINE À CHACHLYKS ET PROCÉDÉ DE PRODUCTION DE CHACHLYKS

(30) Priorität: 03.04.2014 DE 102014104749
(43) Veröffentlichungstag der Anmeldung: 28.10.2015
(73) Patentinhaber: TVI Entwicklung und Produktion GmbH, 83737 Irschenberg (DE)
(72) Erfinder: Völkl, Thomas, 83052 Bruckmühl (DE)
(74) Vertreter: Weickmann & Weickmann PartmbB

(56) Entgegenhaltungen:
- EP-A1- 1 464 226
- WO-A1-2009/025082
- DE-T2-602004 001 588
- US-A- 4 604 771
- US-A1- 2009 181 155

## Beschreibung

### I. Anwendungsgebiet

Die Erfindung betrifft das Herstellen von Schaschlikspießen, bei denen auf einem Spieß, meist einem Einwegspieß aus Holz, Zutaten in Form von Fleischstücken oder Gemüsestücken wie Paprikastücken und Zwiebelstücken nacheinander, vorzugsweise in einer bestimmten Reihenfolge, aufgespießt sind.

Der Standard-Schaschlikspieß besteht heute aus **5** Fleischstücken und **4** Paprika- und Zwiebelstücken, die in einer festgelegten Reihenfolge auf dem Spieß vorhanden sein sollen.

### II. Technischer Hintergrund

Das Aufspießen auf den Spieß ist bisher meistens in Handarbeit geschehen, aufgrund der dabei auftretenden Probleme:
- die einzelnen Zutaten sind in ihrem Umfang und ihrer Form verschieden,
- die einzelnen Zutaten sind unterschiedlich hart und zäh,
- die Spieße sind nicht immer gerade,
- die Spieße sind in Querrichtung wenig stabil.

Eine auch teilweise Automatisierung des Herstellvorgang hat bisher nur insofern stattgefunden, als dass das Aufspießen der einzelnen Zutaten entlang eines Förderbandes auf unterschiedliche manuelle Arbeitskräfte verteilt wurde, sodass jede Arbeitskraft eine bestimmte Zutat und in einer bestimmten Position in der Reihenfolge der Zutaten auf dem Spieß aufspießt.

Daneben sind Lösungen bekannt, bei denen ein Roboter einen Spieß hält und damit nacheinander die unregelmäßig auf einem Transportband herangeführten Zutaten nacheinander aufspießt und/oder die Zutaten in Rinnenherantransportiert und von Hand aufgespießt werden.

Für den dabei erzielten Output ist der hierfür getriebene technische Aufwand jedoch wesentlich zu hoch.

Weiterhin ist aus der WO 2009/025082 A1 eine Maschine zum Herstellen von Schaschlik-Spießen bekannt, bei der die einzelnen aufzuspießenden Stücke jeweils in einem nach oben offenen Napf aufgenommen werden und sich eine Vielzahl von Näpfen in Reihen und Linien ein bewegliches Napf-Band oder Napf-Teppich bilden.

Das Aufspießen erfolgt, in dem quer zu der möglichen Bewegungsrichtung des Napf-Teppichs Spieße horizontal durch die in einer Reihe von neben einander befindlichen Näpfen liegenden Stücke gestoßen werden, wofür die Näpfe in den quer zur Stoßrichtung liegenden Wänden entsprechende nach oben offene Ausnehmungen aufweisen.

Anschließend bleiben die durchspießten Zutaten mit Spieß zunächst in der Napf-Reihe liegen.

Um das nach oben Abdrängen der Stücke aus dem Napf beim Durchspießen zu verhindern, muss hierfür allerdings während des Durchspießens das jeweilige Stück durch einen Deckel oder Niederhalter, der die obere offene Seite des jeweiligen Napfes verschließt, im Napf gehalten werden.

### III. Darstellung der Erfindung

### a) Technische Aufgabe

Es ist daher die Aufgabe gemäß der Erfindung, eine Vorrichtung und ein Verfahren zur Verfügung zu stellen, die mit begrenztem technischem Aufwand einen möglichst hohen Output bei möglichst geringer Fehlerquote erreicht.

### b) Lösung der Aufgabe

Diese Aufgabe wird durch die Merkmale der Ansprüche **1** und **11** gelöst. Vorteilhafte Ausführungsformen ergeben sich aus den Unteransprüchen. Hinsichtlich des Verfahrens wird diese Aufgabe primär dadurch gelöst, dass in einem Halter mehrere Spieße nebeneinander gehalten werden und auf alle Spieße des Halters gleichzeitig Zutaten aufgespießt werden, nacheinander in der erforderlichen Reihenfolge der Zutaten auf den einzelnen Spießen.

Zu diesem Zweck werden die Zutaten einzeln in einem Napf dargeboten, der in der Mitte seines Bodens ein Durchgangsloch besitzt, so dass der Spieß von oben kommend durch die Zutat und das Loch hindurchgesteckt werden kann. Es wird ein ganzer Satz solcher Näpfe für jeden einzelnen Spieß zur Verfügung gestellt, in der sich die Zutaten befinden, die sich danach auf dem Schaschlikspieß aufgespießt wiederfinden sollen.

Entsprechend der Anzahl von Spießen im Halter sind mehrere derartige Sätze von Näpfen dargeboten.

Die Spieße werden in einer definierten Anordnung parallel nebeneinander und beabstandet in einem beweglichen Spießhalter aufgenommen und sind dort an ihren hinteren Enden gehalten.

Dadurch ist es möglich, den Spießhalter mit allen darin gehaltenen Spießen gegen die jeweils gleichen Näpfe der verschiedenen Sätze von Näpfen abzusenken und gleichzeitig auf jeden Spieß eine Zutat aufzuspießen, und dies hintereinander entlang aller Näpfe aller Napfsätze, bis auf diese Art und Weise alle Spieße im Spießhalter gleichzeitig mit Zutaten aufgefüllt sind.

Vorzugsweise bestehen die Napfsätze aus Napfreihen, insbesondere geraden Napfreihen. Mehrere solcher Napfreihen befinden sich nebeneinander in einem Abstand, der dem Abstand der Spieße in dem Spießhalter entspricht.

Dieser Napfteppich aus nebeneinander parallel liegenden Napfreihen ist quer zur Verlaufsrichtung der Napfreihen beweglich, und stellt eine Art Förderband für die Zutaten dar.

Der längliche Spießhalter wird zum Aufspießen quer über mehrere Napfreihen angeordnet, und zwar über so viele Napfreihen, wie der Spießhalter Spieße besitzt.

Für das Aufspießen wird der Napfteppich angehalten, bis jeweils die gesamte Napfreihe, die jedem Spieß im Spießhalter zugeordnet ist, abgearbeitet ist.

Dann bewegt sich der Napfteppich in seiner Bewegungsrichtung um die gleiche Anzahl von Napfreihen vorwärts, und der mit neuen leeren Spießen bestückte Spießhalter beginnt wieder das Aufspießen.

Damit die Spieße beim Aufspießen nicht seitlich wegknicken, werden sie im vorderen Bereich seitlich abgestützt, zumindest während des Aufspießens der Zutaten.

Das Befüllen der Näpfe des Napfteppichs erfolgt vorzugsweise automatisiert, indem sich quer zur Bewegungsrichtung der Napfteppichs aufgereiht am Beginn des Napfteppichs Vorratsbehälter für die Zutaten befinden, aus deren unteren Auslässen diese einzeln in die darunter befindlichen Näpfe des Napfteppichs fallen.

Um zu erreichen, dass sich in jedem Napf nur eine einzige Zutat befindet, besitzen die Näpfe eine Vertiefung mit einer entsprechenden Tiefe, die nur eine Zutat aufnehmen kann. Befindet sich eine zweite Zutat darüber, so wird diese beseitigt auf unterschiedliche Art:
Die einfachste Art ist ein Abzieher, vorzugsweise in der Bauform einer gegen die Laufrichtung des Napfteppichs rotierenden Abzieher-Welle, wobei der Abzieher quer zur Bewegungsrichtung über dem Napfteppich verläuft und überzählige Zutaten zurückhält, bis diese in einen leeren Napf fallen.

Die aufwendigere Variante besteht darin, den Napfteppich von der Befüllstelle in Bewegungsrichtung nach oben ansteigen zu lassen und in Vibrationen zu versetzen, um überzählige, nicht in der Vertiefung eines Napfes liegende, Zutaten entlang der Schräge des Napfteppichs nach unten rutschen zu lassen, bis diese in einen leeren Napf fallen.

Gegebenenfalls können auch beide Methoden kombiniert werden.

Auch das Beschicken des Spießhalters mit leeren Spießen kann automatisiert werden:
Dazu werden die Spieße auf einer Spießablage parallel nebeneinander in solchen Abständen dargeboten, in der sich die Spießaufnahmen im Spießhalter befinden. Zusätzlich müssen dabei die hinteren Enden der Spieße frei zugänglich sein zum Erfassen durch die Spießaufnahmen des Spießhalters.

Die Spieße werden jedoch als loses Schüttgut bezogen, und müssen erst vereinzelt werden.

Zu diesem Zweck werden sie parallel nebeneinander in ein Spießmagazin mit einer Auslass-Öffnung geschüttet und daraus einzeln entnommen und in den richtigen Abständen auf einem Spießförderer abgelegt.

Dieser Vorgang kann durch einen Vereinzeler automatisiert werden, wie er in einer beispielhaften Ausführungsform später beschrieben wird

Die fertigen Schaschlikspieße werden von dem Spießhalter in Verpackungen, meist in Schalen, abgelegt. Die Schalen befinden sich dabei meistens direkt hintereinander in einem Ablagebereich, beispielsweise auf einem Abförderer für die Schalen, und häufig nicht in dem Abstand, den die Spieße im Spießhalter zueinander einnehmen.

Deshalb müssen die Spieße entweder einzeln oder nur gruppenweise in den Verpackungen abgelegt werden, weshalb die Spießaufnahmen des Spießhalters einzeln und unabhängig voneinander geöffnet und geschlossen werden können, also die Spießaufnahmen die Spieße einzeln halten oder loslassen können.

Der Spießhalter wird also im Turnus
- zunächst zur Spießstation zum Bestücken mit neuen, leeren Spießen bewegt,
- von dort zum Napfteppich zum Aufspießen der Zutaten und
- von dort zum Ablagebereich mit den Verpackungen, insbesondere Schalen, in die die fertigen Schaschlikspieße abgelegt werden,
bewegt.

Auch diese Schalen müssen unter Umständen erst vereinzelt werden, da sie häufig ineinander gestapelt angeliefert werden. Hierfür sind jedoch Lösungen bekannt und verfügbar.

Die Maschine besteht aus hinsichtlich ihrer Funktion unterschiedlichen Baugruppen, nämlich zumindest einer Zutatenbaugruppe und einem beweglichen Spießhalter.

In dem Spießhalter sind mehrere Spieße parallel und mit einem definierten Abstand zueinander an ihrem hinteren Ende aufgenommen, um anschließend mit Hilfe des Spießhalters und den daraus vorstehenden mehreren Spießen auf alle Spieße gleichzeitig entsprechend positionierte Zutaten aufspießen zu können.

Das Darbieten der Zutaten in einer bestimmten Anordnung zueinander leistet die Zutaten-Baugruppe, die eine Vielzahl von Näpfen umfasst, in denen jeweils ein Stück einer Zutat zur Verfügung gestellt wird.

Zum Aufspießen kann der Spießhalter abgesenkt werden, sodass der jeweilige Spieß durch die Zutat in dem Napf hindurchgestoßen wird und der Spieß durch das Durchgangsloch im Boden des Napfes beliebig weit nach unten vorstehen kann.

Sätze von Näpfen mit jeweils der gleichen Zutat als Inhalt werden in der gleichen räumlichen Anordnung zueinander dargeboten, wie die räumliche Anordnung der Spieße in dem Spießhalter. Bevorzugt sind die Spieße im Spießhalter entlang einer geraden Linie angeordnet.

Dann empfiehlt es sich, die Näpfe in Napf-Reihen anzuordnen, wobei die Anzahl der Näpfe einer Napf-Reihe der Anzahl der Zutaten auf einem fertigen Schaschlikspieß entspricht, vorzugsweise jedoch die Reihenfolge der Zutaten innerhalb der Napf-Reihe von Näpfen nicht der Reihenfolge der Zutaten auf dem späteren Schaschlikspieß entspricht, um die Befüllung der Näpfe zu erleichtern.

Derartige Napf-Reihen von gefüllten Näpfen sind hintereinander, also mit den einzelnen Napf-Reihen parallel und beabstandet zueinander, in einer zumindest so großen Anzahl als zweidimensionaler, etwa horizontaler, Napf-Teppich angeordnet, dass die Anzahl von Näpfen in Erstreckungsrichtung des Napf-Teppichs, also quer zur Erstreckungsrichtung der Napf-Reihen, größer ist als die Anzahl der Spieße des Spießhalters.

Der Abstand zwischen den Napf-Reihen entspricht dem Abstand der Spieße im Spießhalter.

Dadurch kann der Spießhalter mit seiner Längsrichtung in Verlaufsrichtung des Napf-Teppichs die erste Zutat in jeder Napf-Reihe aufspießen, anschließend die zweite Zutat in dieser Napf-Reihe usw. bis die momentan in Arbeit befindlichen Napf-Reihen geleert und die im Spießhalter gehaltenen Spieße gefüllt sind.

Dann fährt der Napf-Teppich in seiner Verlaufsrichtung um die Länge des Spießhalters, also die Anzahl der im Spießhalter gehaltenen Spieße, vor und mit leeren Spießen im Spießhalter erfolgt der nächste Durchgang.

Die Maschine umfasst auf jeden Fall auch eine Steuerung, um die Bewegungen der beweglichen Komponenten relativ zueinander zu steuern.

Die Maschine kann weitere Baugruppen zur weiteren Automatisierung umfassen:
So kann eine Spießbereitstellungsbaugruppe vorhanden sein, in der die Spieße eingefüllt und vereinzelt werden, auf ihre Geradheit überprüft werden und dann mit definiertem Abstand zueinander entsprechend dem Abstand der Spießaufnahmen in dem Spießhalter zueinander angeordnet werden mit frei zugänglichem hinteren Ende zum Ergreifen durch den Spießhalter.

Es kann ferner eine Ablagebaugruppe vorhanden sein, die eine Ablagefläche für Verpackungen zum Aufnehmen der fertigen Schaschlikspieße umfasst und eine Abfördervorrichtung für die gefüllten Verpackungen.

Die Zutatenbaugruppe kann weiterhin eine Füllvorrichtung aufweisen zum automatisierten Füllen der Näpfe des Napf-Teppichs mit jeweils einer definierten Zutat:
Zu diesem Zweck sind Vorratsbehälter mit jeweils einer Zutaten-Sorte nebeneinander in Verlaufsrichtung der Napf-Reihen angeordnet, häufig mit einer Breite von mehreren Napfzeilen, mit jeweils einem Auslass z.B. in Form einer offenen Seite, über den Näpfen der Napf-Reihen, die darunter weg in Bewegungsrichtung des Napf-Teppichs hindurch laufen. Schwerkraftbedingt fallen Zutaten auf die Näpfe, gegebenenfalls mehr als eine Zutat auf oder in einen Napf.

Die zu viel auf dem Napf-Teppich liegenden Zutaten können manuell entfernt werden.

Eine stärker automatisierte Lösung des Entfernens besteht darin, dass der Napf-Teppich von den Auslässen an schräg ansteigt und die Näpfe mittels eines Rüttlers in Vibrationen versetzt werden können. Dadurch gleiten die nicht in der Vertiefung eines Napfes liegenden Zutaten entlang der Schräge des Napf-Teppichs nach unten, bis sie beispielsweise einen leeren Napf vorfinden und in diesen hineinfallen.

Statt durch Vibration können überzählige Zutaten auch durch einen Abstreifer, vorzugsweise eine entgegen der Laufrichtung des Napfteppichs rotierende Abstreifer-Welle, von der mehrere Abstreifer über den Umfang verteilt vorstehen, in leere Näpfe geschoben werden.

Falls das Bevorraten der Zutaten in einfachen, aufragenden, trichterförmigen Vorratsbehältern nicht ausreicht für eine gleichmäßige Abgabe an den Napfteppich, können zwischen den Vorratsbehältern und dem Napf-Teppich wirksame Vereinzeler für die jeweiligen Zutaten eingesetzt werden, abgestimmt auf die Eigenschaften der Zutat. So haften Fleischstücke beispielsweise wesentlich stärker aneinander als Zwiebel- oder Paprikastücke.

Damit die jeweilige Zutat in den jeweiligen Napf über dem Loch im Boden zentriert ist, besitzen die Näpfe schräg nach außen oben ansteigende Flanken und sind beispielsweise viereckig gestaltet..

Die einzelnen Napf-Reihen sind vorzugsweise einstückig, leistenförmig als Napf-Reihen ausgebildet. Diese vorzugsweise leistenförmigen Napf-Reihen sind mit ihren Enden zwischen zwei parallel laufenden, ringförmig endlos umlaufenden, Leisten-Förderern verbunden, die die Bewegung des Napf-Teppichs bewirkt.

Ein Problem ist die geringe Belastbarkeit der Spieße quer zu ihrer Längsrichtung, und damit die Gefahr des seitlichen Ausknickens zu langer, leerer Spieße, z.B. wenn diese neben dem Durchgangsloch auf den Boden des Napfes treffen, beispielsweise, weil der Spieß von einer außermittig liegenden Zutat seitlich zu sehr abgelenkt wurde..

Der Spießhalter besteht in der Regel aus einem Grundkörper, in dem in einer Reihe hintereinander die Spießaufnahmen für die einzelnen Spieße angeordnet sind, in denen die Spieße an ihrem hinteren, meist stumpfen, Ende gehalten sind.

Vorzugsweise umfasst der Spießhalter eine Stützvorrichtung zum seitlichen Abstützen der Spieße beim Aufspießen der Zutaten in deren mittleren Bereich:
Die Stützvorrichtung besteht beispielsweise aus einer Stützvorrichtung für die Spieße über dem Napf-Teppich in Form von konischen vertikalen Führungen für jeden Spieß, die knapp über den Näpfen gehalten werden und meist nur in einer Reihe unterhalb des Spießhalters vorhanden ist und mit diesem in Richtung der Napf-Reihe mitbewegt wird, und beispielsweise aus zwei zangenartig gegeneinander bewegbaren Stützleisten gebildet sein kann.

Alternativ besteht die Stützvorrichtung aus zwei zangenartig gegeneinander bewegbaren Stützleisten, die entlang je einer Seite der Reihe von Spießen im Spießhalter angeordnet sind, und die Spieße etwa in der Mitte ihrer Länge seitlich abstützen. Durch entsprechende Auskerbungen in den Stützleisten werden die Spieße auch in Längsrichtung des Spießhalters abgestützt.

Die Stützvorrichtung kann hinsichtlich ihres Abstandes von der Spießaufnahme auch veränderbar sein.

Die Spießbereitstellungsbaugruppe mit Spießmagazin und Vereinzeler kann eine Prüfeinheit für die Spieße umfassen. Ein Problem ist nämlich die mangelnde Qualität der meist aus Holz bestehenden Spieße, die oft nicht gerade sind oder aufgrund der hohen Luftfeuchtigkeit in den Produktionsräumen ungerade werden, und bei einer zu starken Krümmung sehr leicht unter Belastung seitlich ausknicken, z.B. weil sie das durchgangsloch im Napf nicht mehr treffen.

Ferner werden die Spieße in großen Paketen angeliefert und müssen noch vereinzelt werden. Das Vereinzeln erfolgt beispielsweise durch zwei oder drei im Abstand zueinander angeordnete und gemeinsam um eine horizontale Achse drehende Kreisscheiben, in deren Außenumfang zueinander fluchtende Ausbuchtungen zum Aufnehmen eines über alle Scheiben durchgehenden Spießes vorhanden sind.

Die Scheiben drehen mit dem Außenumfang knapp neben der als Auslass wirkenden offenen Seite eines Vorratsbehälters für die Spieße entlang, sodass in jeden Satz von Ausbuchtungen ein Spieß hinein fällt und nach oben von den drehenden Kreisscheiben mitgenommen wird, sofern er ausreichend gerade ist. Wenn nicht, kann er durch einen Abstreifer bereits an dieser Stelle aus dem Vereinzeler entfernt werden.

Nach Überwinden des höchsten Punktes der Kreisscheiben werden die Spieße auf der anderen Seite von den Kreisschreiben auf einem Spieß-Förderer abgelegt, der relativ zur Drehgeschwindigkeit der Kreisscheiben sich so bewegt, dass die Spieße sich auf dem Spießförderer in einem Abstand befinden, der dem Abstand der Spießhalterungen im Spießhalter entspricht.

Da die hinteren Enden der Spieße auf dem Spießförderer frei liegen, kann der Spießhalter eine entsprechende Anzahl von Spießen auf dem Spießförderer gleichzeitig ergreifen und in seinen Spießaufnahmen halten und vom Spießförderer abnehmen.

Zusätzlich zum Vereinzeln ist eine Prüfeinheit, vorzugsweise eine berührungslose, optische Prüfeinheit vorhanden, die spätestens auf dem Spießförderer, besser schon auf dem Vereinzeler, die Geradheit der Spieße überprüft und ungerade Spieße aussortiert.

Auch eine Prüfung auf ausreichende Länge der Spieße kann dabei integriert sein.

Der Spießhalter ist vorzugsweise an einem Roboterarm befestigt, und insbesondere um wenigstens **90** Grad verschwenkbar und so bewegbar, dass der Spießhalter sowohl den Spießförderer als auch den Napf-Teppich als auch den Ablagebereich für fertige Spieße erreichen kann.

Der Ablagebereich kann Teil eine Ablage-Baugruppe sein, die beispielsweise einen Schalenförderer umfasst, der der Ablagebereich sein kann.

Im Ablagebereich werden leere Verpackungen, insbesondere Schalen, angeordnet zum Einlegen der fertigen Schaschlikspieße mit Hilfe des Spießhalters.

Im Ablagebereich schließen die Verpackungen, insbesondere Schalen, vorzugsweise ohne Abstand aneinander an. Die Spieße werden vom Spießhalter darin abgelegt, indem die einzelnen Spießaufnahmen einzeln geöffnet und der darin gehaltene Spieß in einer Schale abgelegt wird, bevor nach gegebenenfalls einer Verfahrung des Spießhalters in Verlaufsrichtung der Reihe von Schalen der oder die nächsten Spießaufnahmen geöffnet werden.

Die Ablagebaugruppe kann auch einen Schalenspender umfassen, um die gestapelt angelieferten Schalen zu vereinzeln und auf dem Ablagebereich, insbesondere dem Schalenförderer, abzulegen.

### c) Ausführungsbeispiele

Ausführungsformen gemäß der Erfindung sind im Folgenden beispielhaft näher beschrieben. Es zeigen:
- Fig. **1**a - e:: die Schaschlikmaschine in unterschiedlichen Ansichten,
- Fig. **2**a-c:: die Schaschlikmaschine in unterschiedlichen Betriebszuständen in der Aufsicht von oben,
- Fig. **3**a - c:: den Spießhalter,
- Fig. **4**a - c:: den Vereinzeler für die Spieße und
- Fig. **5:**: die Stützvorrichtung für die Spieße beim Aufspießen.

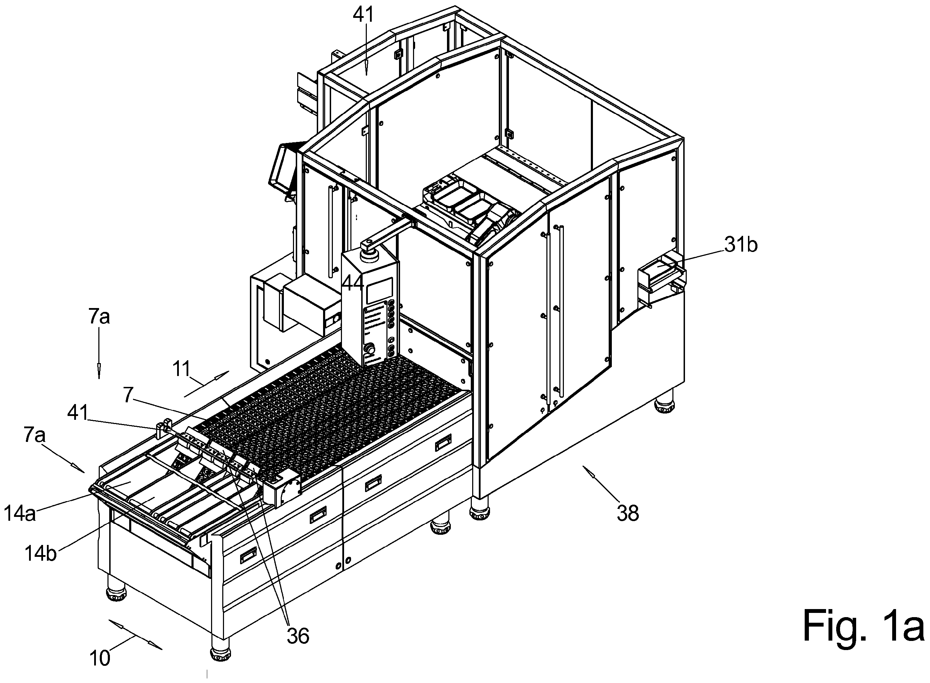

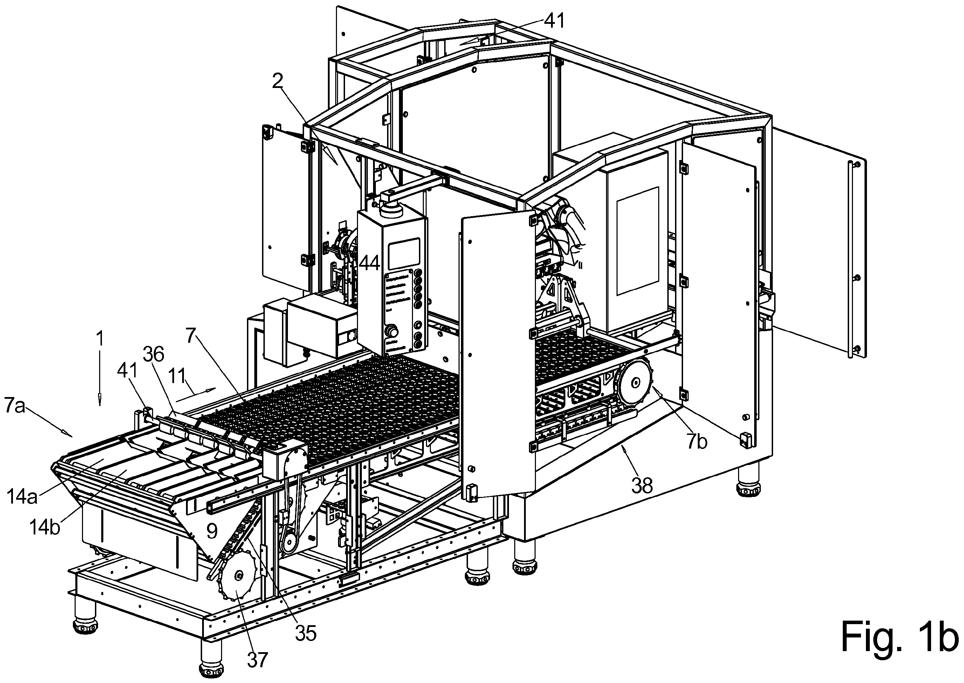

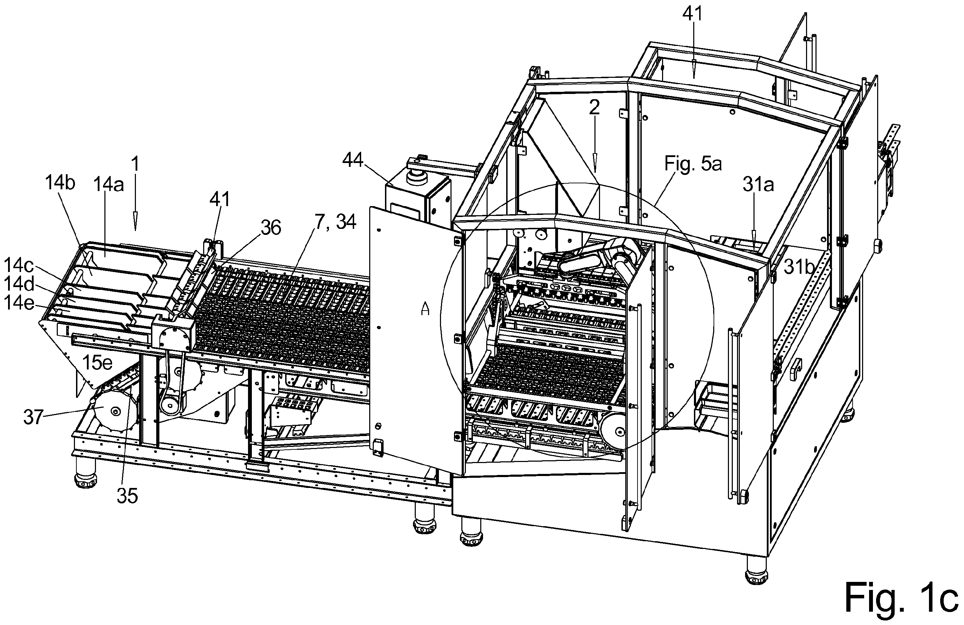

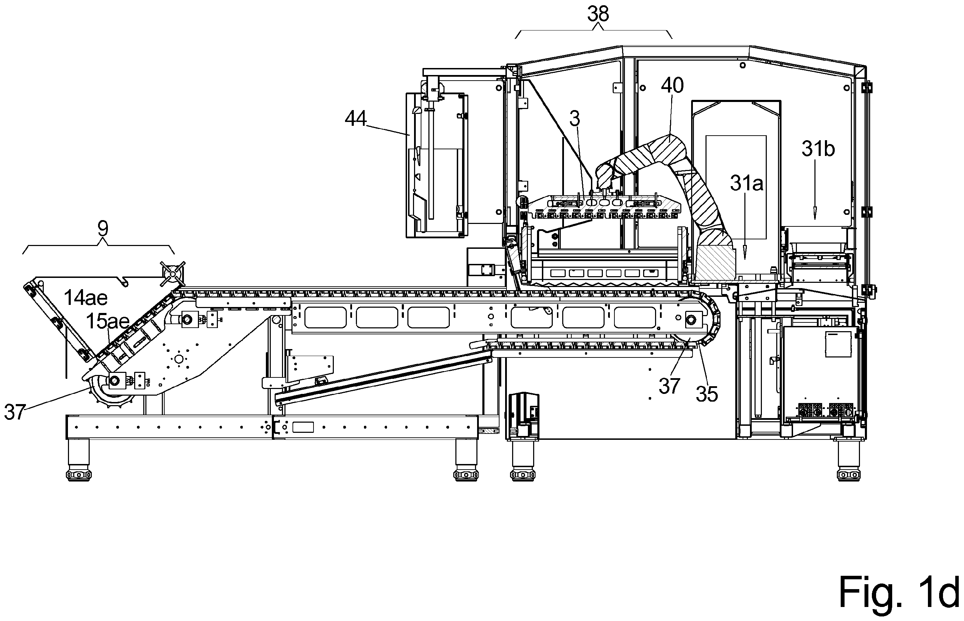

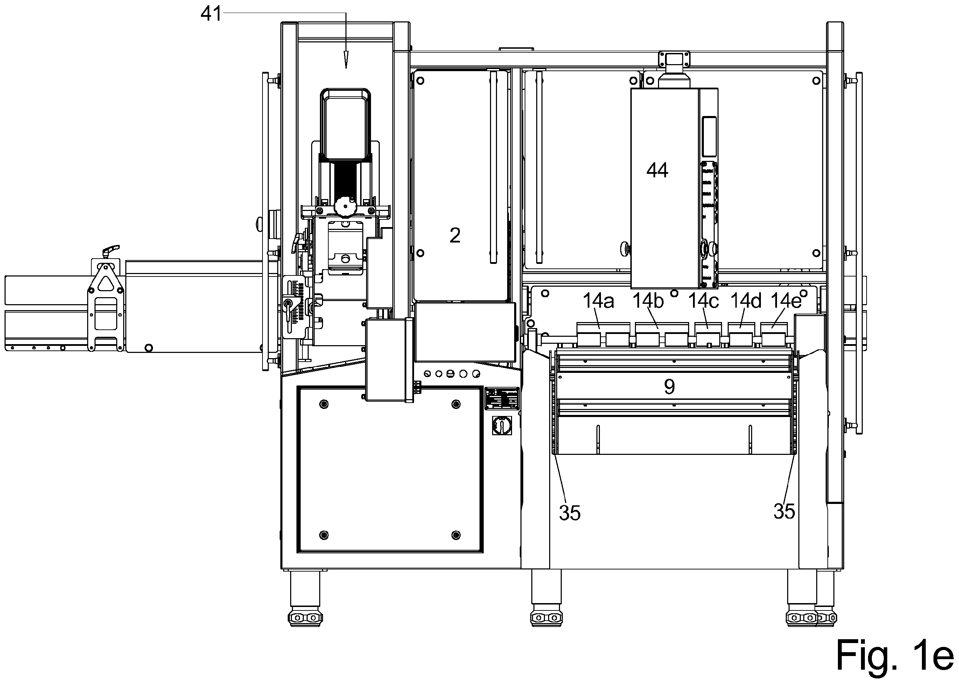

In den Figuren **1** zeigen die Figuren **1**a - c die Schaschlikmaschine in perspektivischer Ansicht, dabei in Fig. **1**a mit seitlich geschlossenen Gehäuseteilen und in den Figuren **1**b, c in unterschiedlichen perspektivischen Ansichten mit geöffneten Gehäuseteilen.

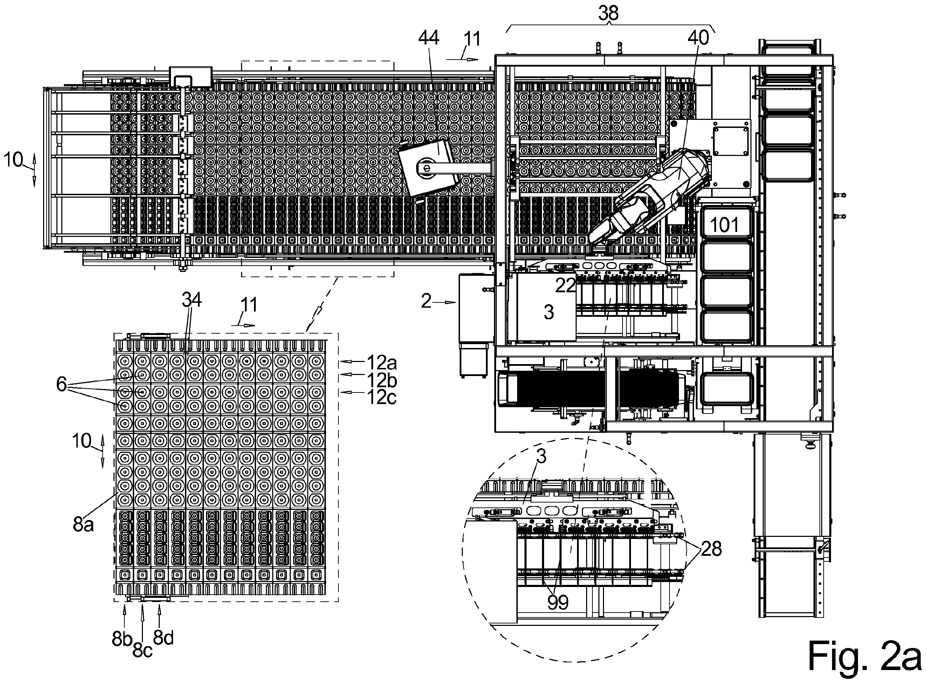

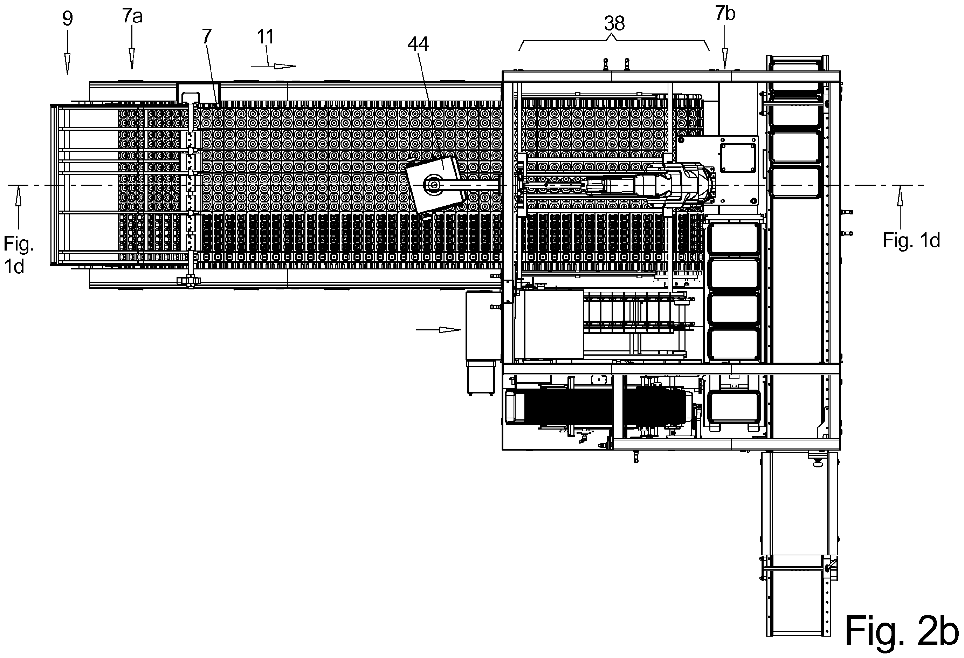

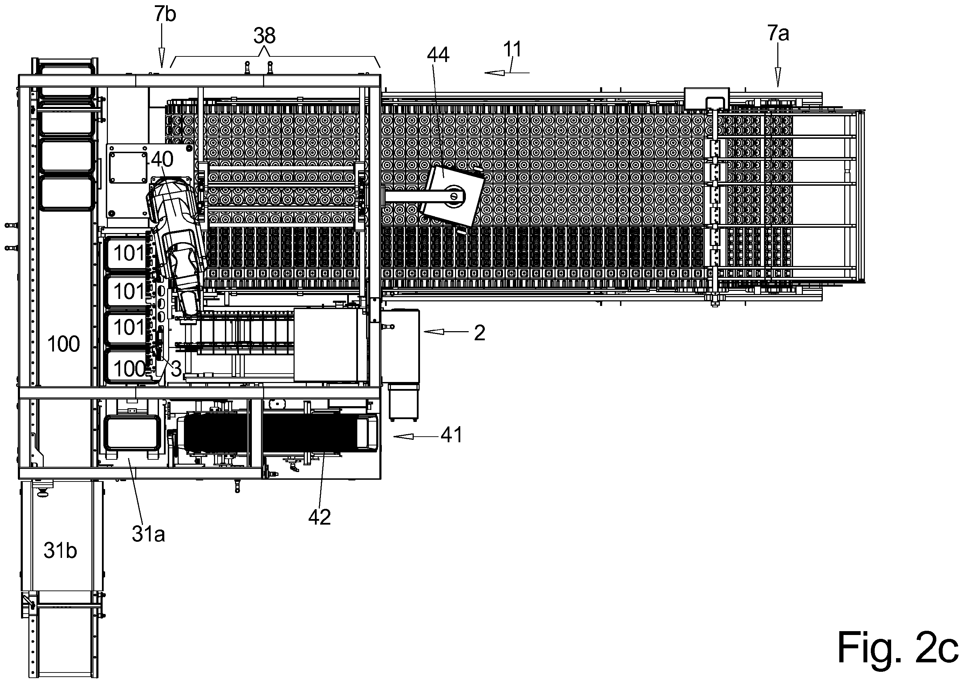

Fig. **1**d zeigt einen vertikalen Längsschnitt durch die Maschine im Zustand der Fig. **2**b und Fig. **1**e zeigt eine Ansicht der Maschine betrachtet in Längsrichtung vom vorderen Ende her.

Wie Figur **1** als auch Figur **2** erkennen lassen, ist eines der wesentlichen Bauteile der Maschine ein Napfteppich **7** in Form eines endlos umlaufenden Bandes aus einzelnen Näpfen **6.**

Der Napfteppich **7** bewegt sich gesteuert in seiner Laufrichtung **11,** der Längsrichtung der Maschine, in der vorliegenden Anmeldung auch "zweite Richtung" genannt, von dem in den Figuren **1** und **2** links liegenden, vorderen Ende **7**a des Napfteppichs **7** zum hinteren Ende **7**b.

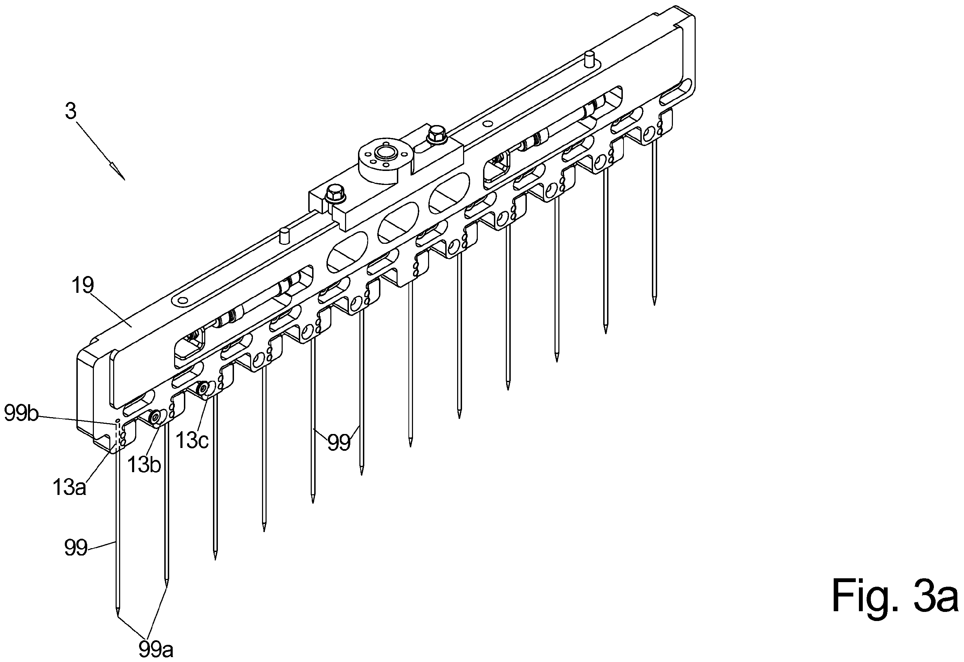

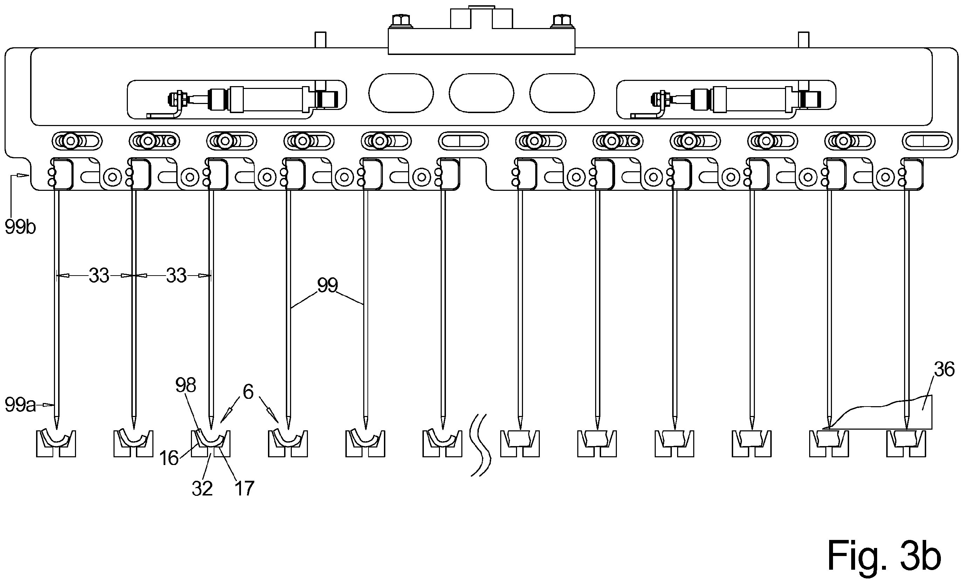

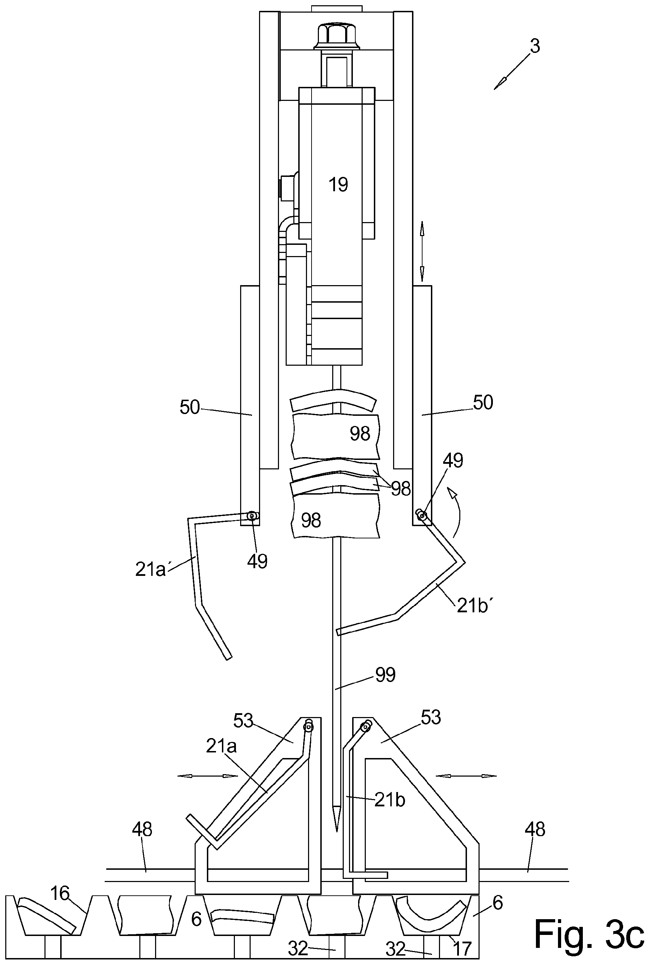

Der Napfteppich **7** besteht aus - siehe Fig. **3**b - einer Vielzahl von Näpfen **6,** die sich nach unten verjüngende Vertiefungen aufweisen, also schrägstehende Flanken **16,** und im Boden **17** ein Durchgangsloch **32,** welches gerade groß genug ist, um einen Spieß **99** hindurchdringen zu lassen.

Die Näpfe **6** sind - siehe vergrößerte Darstellung in Fig. **2**a - in parallel zueinander mit einem definierten Abstand angeordneten Napfreihen **8**a, b angeordnet, die sich in Querrichtung **10** zur Laufrichtung **11** des Napfteppiches **7** erstrecken und als Napfleisten **34** ausgebildet sind, deren Enden jeweils an einem am besten in Fig. **1**d erkennbaren Leistenförderer **35** befestigt sind, die die Napfleisten **34** und damit den gesamten Napfteppich **7** in Laufrichtung **11** transportiert. Der Leistenförderer **35** läuft über zwei Umlenkrollen **37,** von denen wenigstens eine angetrieben ist, endlos um.

Die einander entsprechenden Näpfe **6** der benachbarten Napfreihen **8**a, b bilden somit in Laufrichtung **11** des Napfteppichs **7** verlaufende Napflinien **12**a, b.

Am Anfang **7**a des Napfteppichs **7,** in den Figuren **1** am linken Ende, befindet sich eine Füllvorrichtung **9** für die Näpfe **6,** die bewirkt, dass in der Vertiefung jedes Napfes **6** genau eine der Zutaten **98** zu liegen kommt, die auf den Spieß **99** aufgespießt werden sollen.

Wie am besten Fig. **1**d zeigt, steigt das Obertrum des endlos umlaufenden Napfteppichs **7** am Anfang **7**a des Napfteppichs schräg nach oben an. Über diesem schräg ansteigenden Bereich des Napfteppichs **7** ist die Füllvorrichtung **9** mit mehreren in Querrichtung **10** nebeneinander liegenden Vorratsbehältern **14**a, b (siehe Fig. **1**a - c) angeordnet, die sich zum Teil über mehrere Napfzeilen **12**a, b in Querrichtung hinwegerstrecken, und die eine unmittelbar über dem Napfteppich **7** befindliche offene Seite zum Napfteppich hin besitzen, die als Auslässe **15**a, b wirken.

Jeder Vorratsbehälter **14**a, b enthält jeweils eine bestimmte Zutat **98.** In der Regel enthält ein Schaschlikspieß **100** nur drei oder vier verschiedene Zutaten, nämlich Zwiebelstücke, Paprikastücke sowie Fleischstücke einer oder zweier verschiedener Fleischsorten.

Es können sich jedoch mehr als diese drei oder vier Vorratsbehälter **14**a, b vorhanden, so dass es Vorratsbehälter **14**a, b gibt, die die gleiche Zutat **98** enthalten, was der Optimierung des Verfahrweges des Spießhalters **3** beim späteren Aufspießen dient.

Durch das lediglich Herabfallen der Zutaten **98** in die Näpfe **6** kann es vorkommen, dass in bzw. auf einem Napf **6** mehr als eine Zutat **98** zu liegen kommt, was verhindert werden soll. Zu diesem Zweck befindet sich am Ende der Füllvorrichtung **9** eine Abstreifer-Welle **41,** von der über den Umfang verteilt mehrere, vorzugsweise elastische, Abstreifer **36** radial abragen, und die sich so dreht, dass die Abstreifer **36** entgegen der Laufrichtung des Napfteppichs **7** über diesen streifen. Die Abstreifer **36** erstrecken sich über die gesamte Breite **10** des Napf-Teppichs **7,** und ihre Abstreifkanten reichen bis unmittelbar oberhalb der Oberseite des Napfteppichs **7** herab, was bewirkt, dass bei mehreren in einem Napf **6** aufeinander liegenden Zutaten **98** die zweite und weitere oben liegende Zutat **98** zurückgeschoben wird und in einen nachfolgenden leeren Napf **6** hineinfällt.

Der mit jeweils einer Zutat **98** in jedem Napf **6** gefüllte Napfteppich **7** läuft dann in den Aufspießbereich **38** hinein, in dem etwa am Ende **7**b des Napfteppichs **7** - siehe am besten Fig. **1**d - ein Roboterarm **40** oder eine geeignete andere Handhabungsvorrichtung für den Spießhalter **3** etwa in der Mitte der Quererstreckung des Napfteppiches **7** angeordnet ist, an dessen freiem Ende ein Spießhalter **3** befestigt ist, der in den Figuren **1** noch keine Spieße **99** hält.

In Figur **3**a ist ein solcher Spießhalter einzeln perspektivisch dargestellt, in Figur **3**b in der Frontansicht und in Figur **3**c in der Seitenansicht, jeweils bestückt mit Spießen **99.**

Der Spießhalter **3** umfasst einen leistenförmigen Grundkörper **19,** an dessen Oberseite in der Mitte sich die Kopplungsvorrichtung zum Befestigen am Roboterarm **40** befindet.

An der Unterseite des Grundkörpers **19** befinden sich in Erstreckungsrichtung des Grundkörpers **19** exakt beabstandet einzelne Spießaufnahmen **13**a, b, c, in denen jeweils das hintere Ende **99**b eines Spießes **99** aufgenommen und fixiert werden kann, so dass die in den einzelnen Spießaufnahmen **13**a, b, c gehaltenen Spieße **99** parallel zueinander aus dem Spießhalter **3** hervorragen und sich ihre vorderen, spitzen Enden **99**a vorzugsweise auf einer geraden Linie befinden.

Der Spießhalter **3** ist über den Roboterarm **40** ansteuerbar, so dass die einzelnen Spießaufnahmen **13**a, b, c unabhängig voneinander separat geöffnet und geschlossen werden können.

Wie am besten Fig. **3**b zeigt, sind die Spießaufnahmen **13**a, b, c so zueinander beabstandet, dass sich die darin gehaltenen Spieße **99** im selben Abstand **33** zueinander befinden, den auch die Näpfe **6** benachbarter Napfreihen **8**a, b zueinander einnehmen, wie in Fig. **2**a dargestellt.

Ferner befindet sich neben dem Endbereich des Napfteppichs 7 die Spießbereitstellungsbaugruppe **2,** die dazu dient, dem Roboterarm **40** mit dem Spießhalter **3** neue leere Spieße **99** zur Aufnahme anzubieten.

Hinter dem hinteren Ende **7**b des Napfteppichs **7** befindet sich die Ablagebaugruppe **4,** in der die fertig gefüllten Schaschlikspieße **100** von dem Spießhalter **3** (siehe Fig. **2**c) in Schalen **101** in einem Ablagebereich **29** abgelegt werden. Dabei befinden sich in der Regel mehrere Schalen **101** nebeneinander im Ablagebereich **29,** vorzugsweise mindestens über eine Erstreckung, die der Erstreckung des Spießhalters **3** entspricht, und angeordnet in Querrichtung **10** des Napfteppichs **7,** etwas versetzt zu dessen Breite, meist auf einem ersten Schalenförderer **31**a.

Mit Schaschlikspießen **100** gefüllte Schalen **101** können dann in Verlaufsrichtung **11** des Napfteppichs **7,** vorzugsweise mittels des nun leeren Spießhalters **3,** auf einen dahinter in Querrichtung **11** verlaufenden Schalenförderer **31**b verschoben werden, der die gefüllten Schalen **101** zur weiteren Verpackung abfördert.

Vorzugsweise ist auch der Ablagebereich als Schalenförderer **31**a ausgebildet, denn die Schalen **101** werden zunächst durch einen Schalenvereinzeler **41,** der hier nicht näher beschrieben wird, da es hierfür bekannte Lösungen gibt, aus einem Stapel **42** von ineinander gestapelten Schalen **101** vereinzelt und auf dem Anfang des Schalenförderers **31**a abgelegt, der diese vereinzelten Schalen **101** in den Ablagebereich für die Schaschlikspieße **100** weitertransportiert.

In diesem Sinne zeigen die Figuren **2**a, b, c die unterschiedlichen Funktionszustände des Roboterarms **40** und damit des Spießhalters **3:**
Der Roboterarm **40** kann den Spießhalter **3** sowohl um eine vertikale als auch um wenigstens eine, vorzugsweise zwei, aufeinander senkrecht stehende horizontale Achsen verschwenken und damit in jede gewünschte Raumlage bringen.

Fig. **2**a zeigt den Spießhalter **3** in horizontaler Lage, mit seiner Längsrichtung in Laufrichtung eines neben dem Napfteppich **7** angeordneten Spießförderers **28,** auf dem die Spieße **99** in Abständen **33** entsprechend den Spießaufnahmen **13**a, b des Spießhalters **3** parallel nebeneinander sich quer über den Spießförderer **28** erstreckend abgelegt sind, mit ihren hinteren freien Enden **99**b über den Spießförderer **28** vorstehend.

Dadurch kann durch den Spießhalter **3** - vorzugsweise bei angehaltenem Spießförderer **28** - eine entsprechende Anzahl von Spießen **99** aufgenommen werden, indem der Spießhalter **3** mit geöffneten Spießaufnahmen **13**a, b, c sich so an die hinteren Enden **99**b der nebeneinander liegenden Spieße **99** annähert, dass diese in die Spießaufnahmen **13**a, b, c bis zu einem dort vorhandenen Anschlag hineinragen und dann alle Spießaufnahmen **13**a, b, c gemeinsam geschlossen werden. Damit ist der Spießhalter **3** mit neuen, leeren Spießen **99** bestückt.

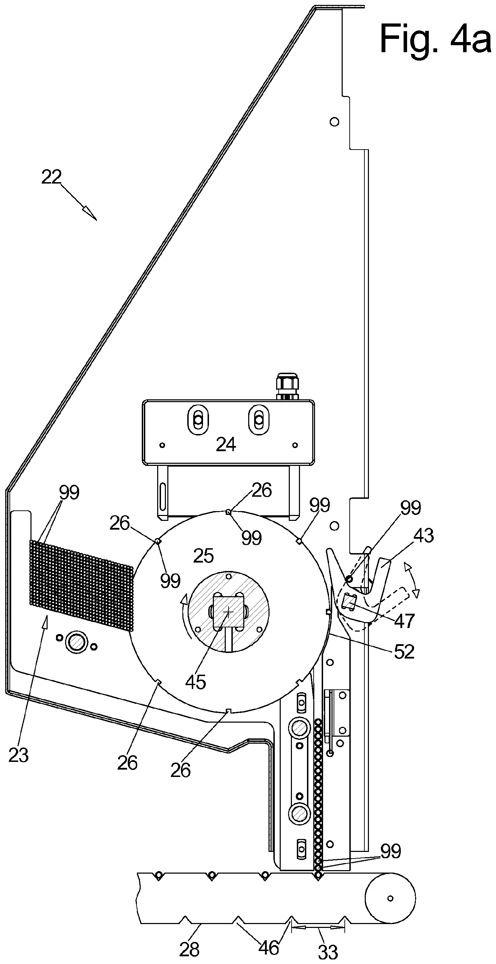

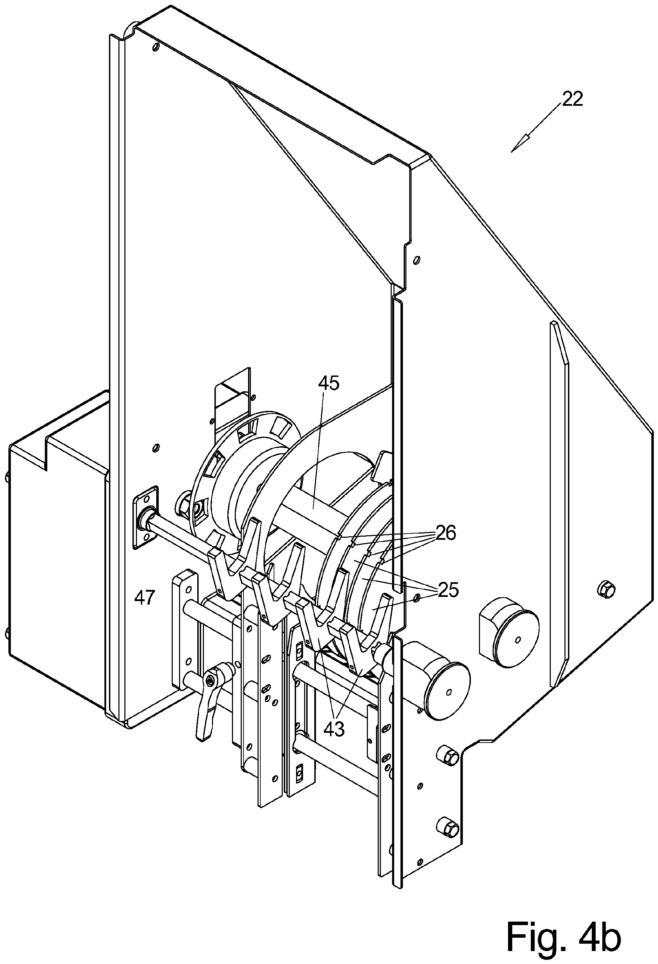

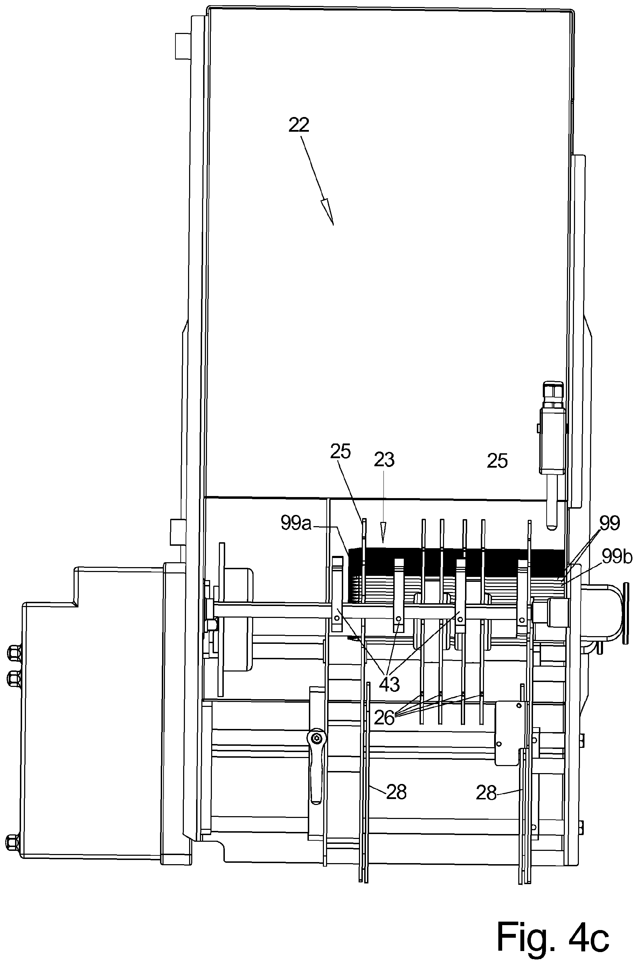

Wie die Spieße **99** vereinzelt werden und auf dem Spießförderer **28** abgelegt werden, wird später anhand der Figuren **4**a - c beschrieben.

Anschließend richtet der Roboter zum Aufspießen - siehe Fig. **2**b - den Spießhalter **3** mit seiner Erstreckungsrichtung in Laufrichtung **11** des Napfteppichs **7** aus, und senkt ihn im Aufspießbereich **38** jeweils von oben in einen Napfsatz **39** hinein ab, der sich über eine der Anzahl der Spieße **99** im Spießhalter **3** gehaltenen Anzahl von Spießreihen **8**a, b erstreckt und die als nächstes benötigte Zutat **98** enthält.

Auf diese Art und Weise bewegt sich der Spießhalter **3** über die Breite des Napfteppichs **7** im Aufspießbereich **38** hinweg, wobei die Anzahl von Näpfen **6** in einer Spießreihe **8** der Anzahl aufzunehmender Zutaten **98** auf einem Schaschlikspieß **100** entspricht, aber nicht unbedingt dessen Reihenfolge in Querrichtung des Napfteppiches **7,** um die Anzahl der Vorratsbehälter **14**a, b zu minimieren.

Sind die Spieße **99** im Spießhalter **3** auf diese Art und Weise vollständig mit Zutaten **98** gefüllt und nun vollständig bestückte Schaschlikspieße **100,** so schwenkt der Roboterarm **40** den Spießhalter **3** (siehe Figur **2**c) zum Ablagebereich **29** mit seiner Erstreckung parallel zur Laufrichtung des Schalenförderers **31**a, so dass die Schaschlikspieße **100** über die Schalen **101** gehalten werden. Dann werden die Spießaufnahmen **13**a, b geöffnet, entweder gemeinsam oder einzeln separat, gegebenenfalls unter Verfahrung des Spießhalters **3** in Erstreckungsrichtung des Schalenförderers **31**a, bis in jeder Schale **101** die gewünschte Anzahl von Schaschlikspießen **100** liegt.

Bis alle Schalen **101** im Ablagebereich **29** vollständig gefüllt sind, können die Schaschlikspieße **100** mehrerer Spießhalter **3** benötigt werden.

Sind die Schalen **101** vollständig gefüllt, können entweder mithilfe des leeren Spießhalters **3** oder mithilfe eines separaten Schiebers die gefüllten Schalen **101** auf einen parallel dazu weiter hinten verlaufenden weiteren Schalenförderer **31**b verschoben werden, der als Abförderer für die gefüllten Schalen **101** zur weiteren Verarbeitung dient.

Die Figuren **4**a - c zeigen das Vereinzeln der Spieße, die als Schüttgut in einem Spießmagazin **23** lagern.

Der Funktionsablauf ist am besten in Fig. **4**a zu erkennen:
Der Vereinzeler **22** besteht im Wesentlichen aus mehreren axial beabstandet auf einer Scheibenachse **45** angeordneten Kreisscheiben **25,** in deren Außenumfang axial fluchtend zueinander Ausbuchtungen **26** über den Umfang verteilt an definierten Positionen vorhanden sind, so dass darin jeweils gerade der Querschnitt eines Spießes **99** zumindest teilweise aufgenommen werden kann.

In die zueinander fluchtenden Ausbuchtungen **26** der mehreren Scheiben **25** kann somit jeweils ein Spieß **99** hineinfallen.

Die Scheibenachse **45** verläuft im Wesentlichen horizontal, und somit stehen die Kreisscheiben **25** jeweils in einer etwa vertikalen Ebene.

Auf der einen Seite - betrachtet in Richtung der Scheibenachse **45** - der aus den mehreren Scheiben **25** bestehenden Scheibeneinheit befindet sich das Spießmagazin **23,** in dem die Spieße **99** parallel zueinander und mit zueinander fluchtenden jeweils vorderen und hinteren Enden lose gestapelt sind.

Auf der einen Seite ist das Magazin offen, so dass die Spieße **99** an den Umfängen der Kreisscheiben **25** auf Höhe deren Scheibenachse **45** oder etwas darüber anliegen. Durch Drehung aller Scheiben **25** gemeinsam und synchron um die Scheibenachse **25** in Fig. **4**a im Uhrzeigersinn, also so, dass sich der Umfang der Kreisscheiben **25** entlang der lose gestapelten Spieße **99** von unten nach oben bewegt, rutscht in je eine der zueinander fluchtenden Ausbuchtungen **26** der Kreisscheiben **25** ein Spieß **99** hinein und wird entlang des Umfanges der Kreisscheiben **25** nach oben getragen.

Am höchsten Punkt der Kreisscheiben **25** sitzt über diesen eine Prüfeinheit **24,** die optisch die Geradheit des an dieser Position befindlichen Spießes **99** prüft..

Beim Weiterdrehen der Kreisscheiben **25** wandert der jeweilige Spieß **99** entlang des Umfanges der Kreisscheiben **25** nach unten, und würde ab einem gewissen Punkt aus den fluchtenden Ausbuchtungen **26** herausfallen. Um die Spieße über diesen Umfangspunkt hinaus weiter nach unten führen zu können, ist radial außerhalb der Kreisscheiben **25** jeweils eine z.B. plattenförmige Gegen-Führung **52** in einem solchen Abstand angeordnet, dass dazwischen der in einer Ausbuchtung **26** liegende Spieß **99** definiert weiter nach unten gefördert werden kann.

Die Spieße **99** sollen jedoch auf dem bezüglich der Scheibenachse **45** vom Spießmagazin **23** gegenüberliegenden Seite auf einem horizontalen Spießförderer **28** abgelegt werden in einem definierten Abstand **33,** dem Abstand der Spießaufnahmen **13**a**,** b im Spießhalter **3.**

Zu diesem Zweck können in dem als endlosen Förderer über zwei Umlenkrollen umlaufenden Spießförderer **28** in diesem Abstand **33** quer über den Spießförderer **28** verlaufende, vorzugsweise selbstzentrierende, Nuten **46** vorhanden sein, in die jeweils ein Spieß **99,** ebenfalls quer über den Spießförderer **28** verlaufend, hineinfällt.

Dies wird erreicht, indem die Spieße **99** zwischen den Kreisscheiben **25** und den Gegen-Führungen **52** weiter nach unten transportiert werden bis zu dem oben offenen Ende eines darunter positionierten, etwa vertikal angeordneten, schlitzförmigen Spieß-Puffer **51,** der so eng ist, dass die Spieße darin nur übereinander gestapelt liegen können. Die Spieße **99** fallen in den Spieß-Puffer **51** und füllen diesen bis zu der Höhe eines Füllstandssensors, dann hält der Vereinzeler an.

Knapp unter dem unteren offenen Auslassende des Spieß-Puffers **51** läuft der Spießförderer **28** durch, wobei der Abstand dazwischen so gering ist, dass nur ein in eine der Nuten **46** fallender Spieß vom Spießförderer **28** mitgenommen wird.

Um krumme Spieße auszusortieren, sind auf der Abgabeseite der Kreisscheiben **25,** also oberhalb des Spießförderers **28,** auf einer Schwenkwelle **47,** die parallel zur Scheibenachse **45** verläuft, knapp außerhalb des Umfangsbereiches der Kreisscheiben **25** axial auf der Schwenkwelle **47** beabstandet jeweils axial zwischen den Kreisscheiben **25** U-förmige Abnehmer **43** angeordnet: Diese können synchron durch Verschwenken der Schwenkwelle **47** mit dem freien Ende ihres den Kreisscheiben **25** zugewandten Schenkels in den Umfangsbereich der Kreisscheiben **25** hineinverschwenkt werden, so dass der nächste mittels der Kreisscheiben **25** nach unten wandernde, von der Prüfeinheit **24** als krumm erkannte, Spieß **99** in die U-förmigen Aussparungen der zueinander fluchtenden Abnehmer **43** fällt und später entsorgt werden kann.

Vorzugsweise besteht der Spießförderer **28** nur aus zwei schmalen, in Spießerstreckungsrichtung beabstandeten, endlos umlaufenden Bändern, Riemen, Ketten oder ähnlichem, von denen sich die eine nahe dem vorderen Ende **99**a der Spieße **99** befindet, die andere soweit von den hinteren, zueinander fluchtenden, Enden **99**b der Spieße **99** zurückversetzt, dass der Überstand des hinteren Endes **99**b der auf dem Spießförderer **28** liegenden Spieße **99** gegenüber dem Spießförderer **28** für das Ergreifen dieser hinteren Enden mittels der Spießaufnahmen **13**a**,** b, c des Spießhalters **3** ausreicht, wie zuvor erläutert.

Die in der Regel aus Holz bestehenden, dünnen Spieße **99** können leicht zur Seite wegknicken und brechen.

Um das Wegknicken und Brechen der Spieße **99** beim Aufspießen zu verhindern, wird eine Stützvorrichtung **20** verwendet:

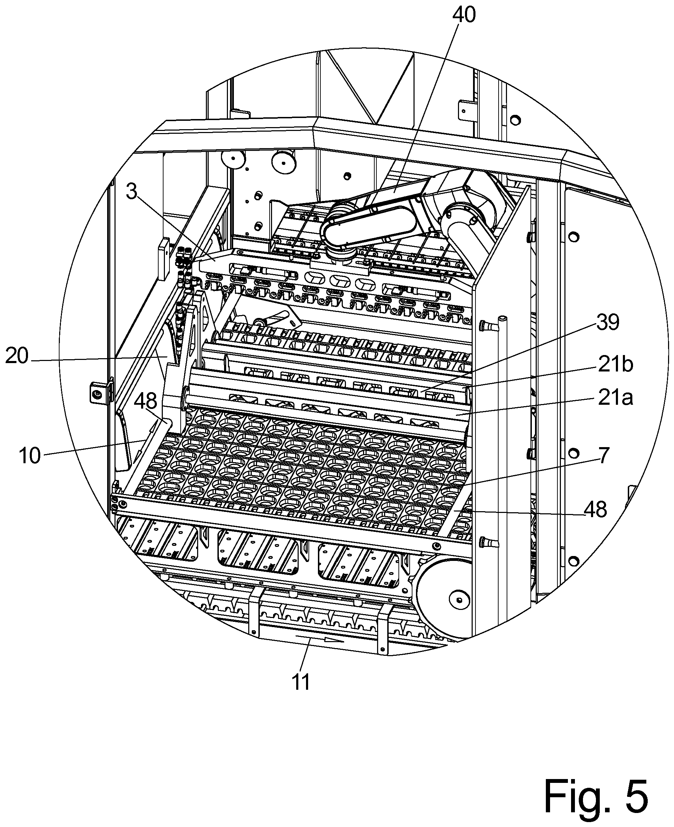

In Fig. **5****,** die eine Ausschnittvergrößerung auf den Aufspießbereich **38** des Napfteppichs **7** gemäß Fig. **2**b darstellt, und in Figur **3**c unten ist eine erste Ausführungsform der Stützvorrichtung **20** dargestellt:
Der Roboterarm **40** hält den leistenförmigen Spießhalter **3** - der hier aus Übersichtlichkeitsgründen ohne eingesetzte Spieße **99** dargestellt ist - oberhalb eines zum Aufspießen vorgesehenen Napf-Satzes **39** parallel zur Laufrichtung **11** des Napfteppichs **7,** der für das nun anstehende Aufspießen der Zutaten **98** aus den Näpfen **6** des Napfteppichs **7** vorzugsweise angehalten ist, denn sonst müsste der Roboterarm **40** synchron mit dem Napfteppich **7** mitbewegt werden.

Knapp oberhalb des für das Aufspießen vorgesehenen Napfsatzes **39** ist parallel zu diesem Napfsatz **39** auf beiden Seiten je eine Stützleiste **21**a, b angeordnet, die einzeln entlang von quer über den Napfteppich **7** sich erstreckenden Führungen **48** gesteuert verfahren werden können mit Hilfe der Lagerböcke **53,** in denen sie endseitig befestigt, insbesondere schwenkgelagert, sind und soweit von beiden Seiten oberhalb und an die Durchgangslöcher **32** in diesem Napfsatz **39** herangefahren werden können, dass dazwischen gerade noch die im Spießhalter **3** aufgenommenen, hier nicht dargestellten, Spieße **99** hindurchgeführt werden können.

Gegebenenfalls können auf den einander zugewandten Flächen der Stützleisten **21**a, b vertikal verlaufende Nuten angeordnet sein, so dass beim bis auf Kontakt gegeneinander gefahrenen Stützleisten **21**a, b vertikale Durchgangsöffnungen entstehen, durch die gerade die Spieße **29** beim Absenken des Spießhalters **3** hindurchgeführt werden können. Diese Durchgangsöffnungen müssen dann natürlich mit den Durchgangslöchern **32** in den Böden **17** der Näpfe des Napfsatzes **39** fluchten. Die Durchgangsöffnungen **32** können zum Einführen der Spieße an ihrem oberen Ende konisch aufgeweitet sein.

Mittels der entlang von Führungen **48** quer über den Napfteppich verfahrbaren Lagerböcke **53** können die Stützleisten **21**a, b mit dem Spießhalter **3** beim Aufspießen von einem Napfsatz **39** zum nächsten verfahren werden. Die Stützposition der Stützleisten **21**a, b wird vorzugsweise erreicht, indem diese um eine in Längsrichtung liegende Schwenkachse gegenüber den Lagerböcken **53** an die Spieß-Reihe im Spießhalter **3** herangeschwenkt werden kann. Für das vollständige Absenken sowie das Hochheben der Spieße **99** werden sie in eine Ruheposition, in der sie nicht mit den bereits aufgespießten Zutaten **98** auf dem teilweise bestückten Spieß **99** kollidieren können, von der Spieß-Reihe wegeschwenkt.

Alternativ können die Stützleisten **21**a, b fix, also nicht schwenkbar, an den Lagerböcken **53** befestigt sein und zwischen Stützposition und Ruheposition nur durch die Verfahrbewegungen der Lagerböcke **53** verbracht werden.

Auf diese Art und Weise werden die Spieße beim Aufspießen der Zutaten seitlich abgestützt, und die Stützvorrichtung **20** verfährt zusammen mit dem Spießhalter während des Aufspießens von einem zum nächsten für das Aufspießen vorgesehenen Napfsatz **39** in Querrichtung **10** über den dabei vorzugsweise stillstehenden Napfteppich **7.**

Eine Stützvorrichtung **20** für die Spieße kann statt am Gestell der Maschine oberhalb des Napfteppichs **7** auch am Spießhalter **3** selbst angeordnet sein, wie in einer alternativen Ausführung anhand Fig. **3**c oben dargestellt, was jedoch das Gewicht des Spießhalters **3** vergrößert:
Dabei sind zwei zangenartig ausgebildete, parallel zu der Reihe von Spießen **99** verlaufende, Stützleisten **21**'a, b verschwenkbar um eine Klappachse **49,** die ebenfalls parallel zur Längserstreckung der Reihe von Spießen **99** des Spießhalters **3** und damit parallel zum Grundkörper **19** des Spießhalters **3** verläuft, so verschwenkbar, dass die beiden Stützleisten **21**'a, b im an die Reihe von Spießen **99** herangeschwenkten Zustand diese seitlich wiederum abstützen, vorzugsweise indem in der den Spießen **99** zugewandten Vorderkante der Stützleisten **21**'a, b wiederum Aussparungen zur Aufnahme der Spießquerschnitte vorhanden sind.

Die Klappachse **49** ist dabei an einem Stütz-Tragteil **50** an dessen unterem Ende befestigt, welches in Verlaufsrichtung der Spieße **99** entlang des Grundkörpers **19** des Spießhalters **3** befestigt und gesteuert verfahrbar ist, abhängig von dem bereits erzielten Füllungsgrad der Spieße **99.**

Eine Steuerung, die vorzugsweise an der beweglich an einem Kragarm befestigten Bedienkonsole (**44**) untergebracht ist, steuert die einzelnen Bewegungen der Maschine in zeitlicher und räumlicher Relation zueinander.

### BEZUGSZEICHENLISTE

- **1**: Zutaten-Baugruppe
- **2**: Spieß-Baugruppe
- **3**: Spießhalter
- **4**: Ablage-Baugruppe
- **5**: Steuerung
- **6**: Napf
- **7**: Napf-Teppich
- **7**a: Anfang
- **7**b: Ende
- **8**a, b: Napf-Reihe
- **9**: Füllvorrichtung
- **10**: erste Richtung, Querrichtung Napfteppich
- **11**: zweite Richtung, Laufrichtung Napfteppich
- **12**a, b: Napf-Linie
- **13**a, b: Spieß-Aufnahme
- **14**a, b: Vorratsbehälter
- **15**a, b: Auslass
- **16**: Flanke
- **17**: Boden
- **18**: Napf-Förderer
- **19**: Grundkörper
- **20**: Stützvorrichtung
- **21**a, b: Stützleiste
- **22**: Vereinzeler
- **23**: Spießmagazin
- **24**: Prüfeinheit
- **25**: Kreisscheibe
- **26**: Ausbuchtung
- **27**: Achse
- **28**: Spießförderer
- **29**: Ablagebereich
- **30**: Schalenspender
- **31**a, b: Schalenförderer
- **32**: Durchgangs-Loch
- **33**: Abstand
- **34**: Napf-Leiste
- **35**: Leisten-Förderer
- **36**: Abstreifer
- **37**: Umlenkrolle
- **38**: Aufspießbereich
- **39**: Napf-Satz
- **40**: Roboter-Arm
- **41**: Abstreifer-Welle
- **42**: Stapel
- **43**: Abnehmer
- **44**: Bedienkonsole
- **45**: Scheibenachse
- **46**: Nut
- **47**: Schwenkwelle
- **48**: Führung
- **49**: Klappachse
- **50**: Stütztragteil
- **51**: Spieß-Puffer
- **52**: Gegen-Führung
- **53**: Lagerbock

- **98**: Zutat
- **99**: Spieß
- **99**a: vorderes Ende
- **99**b: hinteres Ende
- **100**: Schaschlik-Spieß
- **101**: Verpackung, Schale

## Patentansprüche

1. **Schaschlikmaschine** zum Herstellen von Schaschlikspießen (**100**) mit einer definierten Anzahl und Reihenfolge von Zutaten (**98**) auf einem Spieß (**99**), mit
- einer Zutaten-Baugruppe (**1**), in der
- je ein Stück einer Zutat (**98**) in einem Napf (**6**) mit einem Durchgangsloch (**32**) im Boden zur Verfügung gestellt wird,
- die Näpfe (**6**) in Napf-Linien (**12**a, b) angeordnet sind,
- einem Spießhalter (**3**), in dem mehrere Spieße (**99**)
- parallel zueinander mit einem definierten Abstand (**33**) zueinander von der Spießbereitstellungsbaugruppe (**2**) aufgenommen werden können,
- mittels des Spießhalters (**3**) durch die entsprechend beabstandeten gleichen Zutaten (**98**) einer Napf-Linie (**12**a, b) in den entsprechenden Näpfen (**6**) der benachbarten, quer zu den Napf-Linien (**12**a, b) verlaufenden, Napf-Reihen (**8**a, b) hindurch gestochen werden können,
- einer Steuerung (**5**), die die Bewegungen der beweglichen Komponenten relativ zueinander steuert
**dadurch gekennzeichnet, dass**
- das Durchgangsloch (**32**) so gestaltet ist, dass der Spieß (**99**) von oben kommend durch die Zutat und das Durchgangsloch (**32**) hindurchgesteckt werden kann.

2. Schaschlikmaschine zum Herstellen von Schaschlikspießen (**100**) mit einer definierten Anzahl und Reihenfolge von Zutaten (**98**) auf dem Spieß (**99**), mit
- einer Zutaten-Baugruppe (**1**),
- wenigstens einem Spießhalter (**3**),
- einer Steuerung (**5**),
nach Anspruch **1,**
**dadurch gekennzeichnet, dass**
die Zutatenbaugruppe (**1**)
- einen etwa horizontal angeordneten, einteiligen oder mehrteiligen, endlosen oder endlichen Napfteppich (**7**) aufweist, der aus parallel zueinander angeordneten, in einer ersten Richtung (**10**) verlaufenden, Napf-Reihen (**8**a, b) und lotrecht dazu angeordneten Napf-Linien (**12**a, b) besteht, wobei jede Napfreihe (**8**a, b) eine Anzahl von Näpfen (**6**) umfasst entsprechend der gewünschten Anzahl von Zutaten (**98**) auf dem fertigen Schaschlikspieß (**100**),
- die Napfreihen (**8**a, b) in einem definierten Abstand (**33**) zueinander angeordnet sind und
- der Napfteppich (**7**) in Richtung der Abfolge der Napfreihen (**8**a, b), einer zweiten, insbesondere horizontalen, Richtung (**11**), beweglich ist,
und/oder
der längliche Spießhalter (**3**)
- in seiner Erstreckungsrichtung in einem definierten Abstand (**33**) zueinander angeordnete Spießaufnahmen (**13**) aufweist, in der Spieße (**99**) an ihren hinteren Enden (**99**b) in paralleler Lage zueinander gehalten werden können,
- mit seiner Erstreckungsrichtung quer über mehrere Napfreihen (**8**a, b) hinweg und mit je einem Spieß (**99**) über einem Napf (**6**) positioniert werden kann und durch Absenken die in ihm gehaltenen Spieße (**99**) durch die Zutaten (**98**) in den Näpfen (**6**) hindurch stechen kann, und
- die fertig hergestellten Schaschlikspieße (**100**) ablegen kann.

3. Schaschlikmaschine nach Anspruch 2, **dadurch gekennzeichnet, dass** die Zutaten-Baugruppe
- in Bewegungsrichtung (**11**) des Napfteppichs (**7**) an dessen Beginn eine Füllvorrichtung (**9**) zum Füllen der Näpfe (**6**) aus in der ersten Richtung (**10**), also in Verlaufsrichtung der Napfreihen (**8**a, b), nebeneinander angeordneten Vorratsbehältern (**14**a, b) aufweist, aus deren jeweils einem Auslass (**15**a, b) die Zutaten in immer genau den entsprechenden Napf (**6**) in der einen oder den mehreren Napfreihe (**8**a, b) fällt, und/oder
- der Napfteppich (**7**) von den Auslässen (**15** a, b) aus ansteigt und einen Rüttler umfasst, der die Näpfe (**6**) des Napfteppichs (**7**) in Vibrationen versetzt oder einen Abstreifer (**36**), der überzählige Zutaten (**98**) weiterschiebt bis zu einem leeren Napf (**6**).

4. Schaschlikmaschine nach einem der vorhergehenden Ansprüche,
**dadurch gekennzeichnet, dass**
die Näpfe (**6**) insbesondere runde Vertiefungen mit schräg nach außen oben ansteigenden Flanken (**16**) besitzen
und/oder
die einzelnen Napfreihen (**8**a, b) einstückig ausgebildet sind und insbesondere endseitig in einem Napfförderer (**18**) befestigt sind, der die Napfreihen (**8**a, b) in die zweite Richtung (**11**) bewegt.

5. Schaschlikmaschine nach einem der vorhergehenden Ansprüche,
**dadurch gekennzeichnet, dass**
der Spießhalter (**3**) um eine vertikale Achse um wenigstens **90** Grad verschwenkbar ist
und/oder
der Spießhalter (**3**) Spießaufnahmen (**13**) aufweist, die einzeln geöffnet und geschlossen werden können.

6. Schaschlikmaschine nach Anspruch 2, **dadurch gekennzeichnet, dass** der Spießhalter (**3**) einen Grundkörper (**19**) mit den Spießaufnahmen (**13**) aufweist sowie insbesondere eine relativ zum Grundkörper (**19**) entlang der Erstreckung der Spieße (**99**) verfahrbare Stützvorrichtung (**20**) für die Spieße (**99**), wobei die Stützvorrichtung (**20**) insbesondere zwei zangenartig gegeneinander bewegbare Stützleisten (**21**'a, b) aufweist, die entlang je einer Seite der Reihe von Spießen (**99**) angeordnet sind
und/oder
am Bett der Schaschlikmaschine eine in Querrichtung des Napfteppichs (**7**) entlang von Führungen (**48**) verfahrbare Stützvorrichtung (**20**) angeordnet ist mit Stützleisten (**21**a, b), die seitlich an die Reihe von Spießen (**99**) des Spießhalters (**3**) angelegt werden können.

7. Schaschlikmaschine nach einem der vorhergehenden Ansprüche,
**dadurch gekennzeichnet, dass**
die Näpfe (**6**) hinsichtlich ihrer Reihenfolge in den Napfreihen (**8**a, b) nicht die entsprechende Zutat (**98**) in der gewünschten Reihenfolge der Zutaten (**98**) auf dem späteren Schaschlikspieß (**100**) aufweisen, sondern insbesondere gleiche Zutaten (**98**) in benachbarten Napf-Linien (**12**a, b) liegen
und/oder
die Maschine eine Spieß-Baugruppe (**2**) umfasst, mit
- einem Spießmagazin (**23**),
- einem Vereinzeler (**22**), und
- einer Prüfeinheit (**24**).

8. Schaschlikmaschine nach Anspruch 7, **dadurch gekennzeichnet, dass**
- der Vereinzeler (**22**) wenigstens zwei beabstandet zueinander um eine gemeinsame horizontale Achse (**27**) umlaufende Kreisscheiben (**25** a, b, c) mit Ausbuchtungen (**26**) an zueinander fluchtenden Stellen des Umfanges aufweist, in die ein Spieß (**99**) eingelegt werden kann, wobei der Auslass des Spießmagazins (**23**) oberhalb der Achse (**27**) der Kreisschreiben (**25** a, b, c) nahe an deren Außenumfang auf derjenigen Seite der Kreisscheiben (**25**a, b, c) angeordnet ist, auf der die Ausbuchtungen (**26**) sich nach oben bewegen, und/oder
- auf der gegenüberliegenden Ablageseite ein von den Kreisscheiben (**25**a, b, c) von dem Vereinzeler (**22**) radial wegführender Spieß-Förderer (**28**) angeordnet ist zum Ablegen der Spieße (**99**).

9. Schaschlikmaschine nach Anspruch 7, **dadurch gekennzeichnet, dass** die Prüfeinheit (**24**) eine vorzugsweise berührungslos arbeitende, optische Prüfeinheit ist, die die Spieße (**99**) wenigstens auf Geradheit, insbesondere auch auf ausreichende Länge, prüft, und die Prüfeinheit (**24**) entweder im Bereich der Kreisscheiben (**25** a, b, c) oder im Bereich des Spießförderers (**28**) angeordnet ist
und/oder
die Maschine eine Ablage-Baugruppe (**4**) umfasst, mit einem Ablagebereich (**29**) zum Anordnen von Verpackungen, insbesondere Schalen (**101**), nebeneinander zur Aufnahme der Schaschlikspieße (**100**), und der Ablagebereich (**29**) vorzugsweise in Form wenigstens eines Schalenförderers (**31**a, b) ausgebildet ist.

10. Schaschlikmaschine nach Anspruch 9, **dadurch gekennzeichnet, dass** die Ablage-Baugruppe (**4**) einen Schalenspender (**30**) umfasst zum Vereinzeln der gestapelt angelieferten Schalen (**101**) und Ablegen in dem Ablagebereich (**29**), insbesondere auf dem Schalenförderer (**31**a).

11. **Verfahren** zum Herstellen von Schaschlik-Spießen (**100**) mit einer definierten Anzahl und Reihenfolge von Zutaten (**98**) auf dem Spieß (**99**), indem
- auf das vordere, spitze Ende (**99a**) des Spießes (**99**) nacheinander die Zutaten (**98**) in Form von Fleischstücken und Gemüsestücken aufgespießt und in Richtung hinteres Ende (**99**b) des Spießes (**99**) verschoben werden,
**dadurch gekennzeichnet, dass**
- mehrere Näpfe (**6**) mit je einem Durchgangs-Loch (**32**) im Boden (**17**) seiner Vertiefung zur Verfügung gestellt werden,
- je ein Stück einer Zutat (**98**) in einem Napf (**6**) zur Verfügung gestellt wird,
- jeweils ein Napfsatz (**39**) mit Näpfen (**6**) mit gleichen Zutaten (**98**) in einer definierten Anordnung entsprechend der Spieße (**99**) im Spießhalter (**3**) dargeboten werden,
- mehrere Spieße (**99**) in der definierten Anordnung parallel zueinander an ihren hinteren Enden (**99**b) in einen beweglichen Spieß-Halter (**3**) aufgenommen werden,
- mittels des Spießhalters (**3**) alle darin gehaltenen Spieße (**99**) gleichzeitig durch die Zutaten (**98**) in den Näpfen (**6**) des Napf-Satzes (**39**) hindurchgestoßen werden,
und
- dieser Vorgang mit mehreren Napfsätzen (**39**), die die hintereinander auf den Spieß (**99**) aufzunehmenden Zutaten (**98**) enthalten, mehrfach hintereinander durchgeführt wird.

12. Verfahren nach Anspruch **11**,
**dadurch gekennzeichnet, dass**
- je eine Napf-Reihe (**8**a, b) von Näpfen (**6**) in einer ersten horizontalen Richtung (**10**) verlaufend alle Zutaten für einen Schaschlik-Spieß (**100**) enthält,
- in einer zweiten, insbesondere horizontalen, Richtung (**11**) mehrere Napfreihen (**8**a, b) mit Abstand (**33**) hintereinander und beweglich in der zweiten Richtung (**11**) zur Verfügung gestellt werden,
- in dem Spießhalter (**3**) mehrere Spieße (**99**) in einer Reihe mit einem Abstand (**33**) entsprechend dem Abstand (**33**) der Napfreihen (**8**a, b) zueinander aufgenommen sind,
- zum Aufspießen der längliche Spießhalter (3) mit seiner Erstreckungsrichtung lotrecht zur Erstreckungsrichtung (10) der Napfreihen (8a, b), angeordnet wird.

13. Verfahren nach Anspruch 12, **dadurch gekennzeichnet, dass**
beim Aufspießen der Napfteppich (7) bestehend aus den Napfreihen (8a, b) und lotrecht dazu verlaufenden Napf-Linien (12a, b) still steht.

14. Verfahren nach einem der vorhergehenden Verfahrensansprüche 11 bis 13, **dadurch gekennzeichnet, dass**
die mit ihrem hinteren Ende (**99**b) jeweils in einer Spießaufnahme (**13** a, b) des Spießhalters (**3**) aufgenommenen Spieße (**99**) zumindest während des Aufspießens der Zutaten (**98**) weiter vorne in Querrichtung der Spieße (**99**) seitlich abgestützt
und/oder
beim Aufspießen der Zutaten (**98**) die Spieße (**99**) unmittelbar vor der Position der zuletzt aufgespießten Zutat (**98**) und deren Position nach dem Aufspießen abgestützt werden und insbesondere die Stützvorrichtung (**20**) gleichzeitig als Anschlag für die zuerst aufgespießte Zutat (**98**) verwendet wird.

15. Verfahren nach einem der vorhergehenden Verfahrensansprüche 11 bis 14, **dadurch gekennzeichnet, dass**
die Näpfe (**6**) automatisch befüllt werden durch Hineinfallen von Zutaten (**98**) aus Vorratsbehältern (**14**a, b) aus deren Auslässen (**15**a, b) in die Näpfe (**6**) einer oder mehrerer Napfreihe (**8**a, b)
und/oder
die Spießaufnahmen (**13**a, b) im Spießhalter (**3**) einzeln und unabhängig voneinander geöffnet und geschlossen werden können.

16. Verfahren nach einem der vorhergehenden Verfahrensansprüche 11 bis 15, **dadurch gekennzeichnet, dass**
die Näpfe (**6**) nach dem Befüllen schräg nach oben transportiert werden und dabei überzählige, nicht in den Vertiefungen eines Napfes (**6**) liegende, Zutaten (**98**) entlang der Schräge nach unten transportiert werden bis zu einem leeren Napf (**6**)
- entweder durch Zurückschieben der überzähligen Zutaten (**98**) mittels eines Abstreifers (**36**), insbesondere an einer rotierenden Abstreifer-Welle montierten Abstreifern (**36**),
- und/oder durch beaufschlagen mit Vibrationen.

17. Verfahren nach einem der vorhergehenden Verfahrensansprüche 11 bis 16, **dadurch gekennzeichnet, dass**
- die Spieße (**99**) auf einer Spießablage in Abständen (**33**) entsprechend der Abstände (**33**) der Spießaufnahmen (**13**a, b) im Spießhalter (**3**) angeordnet werden zum Ergreifen durch den Spießhalter (**3**), und insbesondere
- die Spieße (**99**) aus einem Spießmagazin (**23**) einzeln entnommen und in den richtigen Abständen (**33**) auf der Spießablage, insbesondere einem Spießförderer (**28**), abgelegt werden.

18. Verfahren nach einem der vorhergehenden Verfahrensansprüche 11 bis 17, **dadurch gekennzeichnet, dass**
die fertigen Schaschlikspieße (**100**) von dem Spießhalter (**3**) nach ihrer Fertigstellung in Verpackungen, insbesondere Schalen (**101**) abgelegt werden und insbesondere nach vollständiger Füllung der Schalen (**101**) diese mittels des Spießhalters (**3**) auf ein Abförderband verschoben
und/oder
die gestapelten Schalen (**101**) vom Stapel einzeln abgenommen und in einem Ablagebereich (**29**) nebeneinander angeordnet werden zur Aufnahme der fertigen Schaschlikspieße (**100**).

## Claims

1. A shish kebab machine for producing shish kebab skewers (100) with a defined number and sequence of ingredients (98) on a skewer (99), the shish kebab machine comprising:
- a an ingredient module (1) in which
- a piece of an ingredient (98) is provided in a bowl with a pass through hole (32) in a floor,
- the bowls (6) are arranged in bowl lines (12a, b)
- a skewer holder in which plural skewers (99)
- can be received parallel to one another with a defined distance (33) from each other by a skewer providing module (2)
- accordingly offset identical ingredients (98) of a bowl line (12a, b) can be punctured by the skewer holder in corresponding bowls (6) of bowl rows (8a, b) that are adjacent to each other and extend transversal to the bowl lines (12a, b),
- a control (5) which controls movements of movable components relative to each other,
**characterized in that**
- the pass through hole (32) is configured so that the skewer (99) is insertable from above through the ingredient and the pass through hole (32).

2. The shish kebab machine for producing the shish kebab skewers (100) with a defined number and sequence of ingredients (98) on the skewer (99), the shish kebab machine comprising:
- the ingredient module (1),
- the at least one skewer holder (3),
- the control (5),
according to claim 1,
**characterized in that**
the ingredient module (1)
- includes an approximately horizontally arranged one piece or multi piece endless or finite bowl arrangement (7) which includes bowl rows (8a, b) that are arranged parallel to one another and that extend in a first direction (10), and bowl lines (12a, b) arranged perpendicular thereto, wherein each bowl row (8a, b) includes a number of bowls (6) according to a desired number of ingredients (98) on the finished shish kebab skewer (100),
- the bowl rows (8a, b) are arranged at a defined distance (33) from each other, and
- the bowl arrangement (7) is movable in a direction of a sequence of the bowl rows (8a, b) in a second, in particular horizontal direction (11) and/or the elongated skewer holder (3)
- includes skewer receivers (13) that are arranged at a defined distance (33) from each other in an extension direction of the skewer holder wherein the skewer holders support skewers (99) at rear ends (9b) in a parallel position relative to each other,
- the skewer holder is positionable with its extension direction transversally over plural bowl rows (8a, b) and with a respective skewer (99) over a bowl (6) and the skewer holder is configured to punch skewers (99) supported therein through the ingredients (98) in the bowls (6), and
- configured to deposit the finished shish kebab skewers (100).

3. The shish kebab machine according to claim 2,
**characterized in that** the ingredient module
- includes storage containers (14a, b) that are arranged adjacent to each other in a movement direction (11) of the bowl arrangement (7) wherein the ingredient module includes a filling device (9) at a beginning of a the bowl arrangement (7) for filling the bowl (6) and including storage containers (14a, b) that are arranged adjacent to each other in the first direction (10), thus the extension direction of the bowl rows (8a, b) wherein the filling device has a respective outlet (15a, b) that drops the ingredients into an exact bowl (6) in the at least one bowl row (8a, b) and/or
- the bowl arrangement (7) rises from the outlets (15a, b) and includes a rattler that causes the bowl (6) of the bowl arrangement (7) to vibrate or a wiper (36) that moves the redundant ingredients (98) along to an empty bowl (6).

4. The shish kebab machine according to one of the preceding device claims,
**characterized in that**
the bowls (6) include in particular circular indentations with flanks (16) that rise in outward/upward direction and/or
the individual bowl rows (8a, b) are configured integral in one piece and are in particular attached at an end in a bowl conveyor (18) that moves the bowl rows (8a, b) in the second direction (11).

5. The shish kebab machine according to one of the preceding claims,
**characterized in that**
the skewer holder (3) pivotable about a vertical axis by at least 90° and/or
the skewer holder (3) includes skewer receivers (13) that are individually openable and closable.

6. The shish kebab machine according to claim 2,
**characterized in that**
the skewer holder (3) includes a base element (19) with skewer receivers (13) and in particular a support device (20) for the skewers (99) that is movable relative to the blase element (19) along an extension of the skewers (99),
wherein the support device (20) includes in particular two support bars (21'a, b) that are movable relative to each other like prongs, wherein the support bars are arranged along a respective side of the row of skewers (99) and/or
a support device (20) is arranged at a bed of the skewer machine wherein the support device is move able in the transversal direction of the bowl arrangement (7) along supports (48) wherein the support device includes support bars (21a, b) that are applicable laterally to the row of skewers (99) of the skewer holder (3).

7. The shish kebab machine according to one of the preceding claims,
**characterized in that**
the bowls (6) with respect to their sequence in the bowl rows (8a, b) do not include the respective ingredient (98) in the desired sequence of the ingredients (98) on the subsequent shish kebab skewer (100) but in particular identical ingredients (98) are arranged in adjacent bowl lines (12a, b), and/or
the machine includes a skewer module (2) includes
- a skewer magazine (23)
- an individualizer (22), and
- a testing unit (24).

8. The shish kebab machine according to claim 7, **characterized in that**
- the individualizer (22) includes at least two circular discs (25a, b, c) that extend at a distance from each other about a common horizontal axis (27) and include bulges (26) at aligned locations of the circumference into which a skewer (99) can be inserted, wherein an outlet of the skewer magazine (23) is arranged above the axis (27) of the circular discs (25a, b, c) proximal to an outer circumference of the circular discs on a side of the circular discs (25a, b, c) on which the bulges (26) move in upward direction, and/or
- on an opposite depositing side a skewer conveyor (28) is arranged that is oriented radially away from the circular discs (25a, b, c) and oriented away from the individualizer (22) for depositing the skewers (99).

9. The shish kebab machine according to claim 7, **characterized in that**
the testing unit (24) is an advantageously touch free optical testing unit which tests the skewers (99) at least for straightness, in particular also for sufficient length and wherein the testing unit (24) is either arranged in the portion of the circular discs (24a, b, c) or in the portion of the skewer conveyor (28), and/or
the machine includes a placement module (4) with a placement portion (29) for arranging packaging in particular bowls (101) adjacent to one another for receiving the shish kebab skewers (100) and wherein the placement portion (29) is advantageously formed as at least one bowl conveyor (31a, b).

10. The shish kebab machine according to claim 9,
**characterized in that**
the placement module (4) includes a bowl dispenser (30) for individualizing stacked bowls (101) and placing them in the placement portion (29), in particular on the bowl conveyor (31a).

11. A method for producing shish kebab skewers (100) with a defined number and sequence of ingredients (98) on the skewer (99), in that the ingredients (98) in a form of meat pieces and vegetable pieces are spiked onto a pointed front end (99a) of the skewer (99) in sequence and moved in a direction of a rear end (99b) of the skewer (99),
**characterized in that**
- plural bowls (6) respectively with a pass through hole (32) are provided in a base (17) of an indentation,
- a respective piece of an ingredient (98) is provided in a bowl (6),
- a respective bowl set (39) with bowls (6) with identical ingredients (98) is provided in a defined arrangement corresponding to the skewers (99) in the skewer holder (3),
- plural skewers (99) are received in a defined arrangement parallel to one another at their rear ends (99b) in a movable skewer holder (3),
- The skewer holder pierces all skewers (99) held therein simultaneously through the ingredients (98) in the bowls (6) of the bowl set (39), and
- this process is performed several times in sequence with plural bowl sets (39) that includes the ingredients (98) that are to be received on the skewer (99) behind one another.

12. The method according to claim 11,
**characterized in that**
- a respective bowl row (8a, b) of bowls (6) includes all ingredients for a shish kabob skewer (100) in a first horizontal direction (10),
- in a second direction (11) that is in particular horizontal plural bowl rows (8a, b) are provided with an offset (33) behind one another and move able in the second direction (11),
- in the skewer holder (3) plural skewers (99) are received in a row with a distance (33) corresponding to the distance (33) of the bowl rows (8a, b) from each other,
- for spiking the elongated skewer holder (3) with its extension is arranged perpendicular to the extension (10) of the bowl rows (8a, b).

13. The method according to claim 12,
**characterized in that**
the bowl arrangement (7) including the bowl rows (8a, b) and bowl lines (12a, b) extending perpendicular thereto stands still for spiking.

14. The method according to one of the preceding method claims 11 - 13,
**characterized in that**
the skewers (99) received with their rear end (99b) respectively in a skewer receiver (13a, b) of the skewer holder (3) are laterally supported at least during spiking of the ingredients (98) further in front in a transversal direction of the skewers (99) and/or during spiking of the ingredients (98) the skewers (99) are supported directly in front of a position of the eventually pierced ingredient (98) and its position after the skewering and in particular the support arrangement (20) is simultaneously used as a stop for the first spiked ingredient (98).

15. The method according to one of the preceding method claims 11 - 14,
**characterized in that**
the bowls (6) are filled automatically by ingredients (98) dropping in from storage containers (14a, b) from their outlets (15a, b) into the bowls (6) of one or plural bowl rows (8a, b) and/or
the skewer receivers (13a, b) in the skewer holder (3) are openable and closable individually and independently from each other.

16. The method according to one of the preceding method claims 11 - 15,
**characterized in that**
the bowls (6) are transported upward at a slant angle after filling and redundant ingredients (98) that are not sitting in the recesses of a bowl (6) are transported downward along the slant to an empty bowl (6),
- either by pushing the redundant ingredients (98) back by a wiper (36) in particular by wipers (36) that are attached at a rotating wiper shaft, and/or
- by loading with vibrations.

17. The method according to one of the preceding method claims 11 - 16,
**characterized in that**
- the skewers (99) are arranged on a skewer deposit at distances (33) corresponding to distances (33) of the skewer receivers (13a, b) in the skewer holder (3) for pick up by the skewer holder (3) and in particular
- the skewers (99) are individually retrieved from a skewer magazine (23) and placed at correct distances (33) on the skewer deposit, in particular a skewer conveyor (28).

18. The method according to one of the preceding method claims 11 - 17,
**characterized in that**
the finished shish kebab skewers (100) are deposited by the skewer holder (3) after their completion in packaging, in particular bowls (101) and in particular after completely filling the bowls (101), the bowls are moved by the skewer holder (3) onto an extraction conveyor, and/or
stacked dishes (101) are individually moved from the stack and arranged in a deposit area (29) adjacent to one another for receiving the finished shish kebab skewers (100).

## Revendications

1. Machine à chachlyk pour produire des brochettes chachlyk (100) avec un nombre et un ordre défini d'ingrédients (98) sur un pic (99), avec
* un module d'ingrédients (1) où
- une partie respective d'un ingrédient (98) est prévue dans une coupelle (6) avec une orifice de passage (32) dans le fond,
- les coupelles (6) sont prévues dans des lignes de coupelle (12a, b),
* un support de pic (3) où plusieurs pics (99)
- peuvent être logés par le module de provision de brochettes (2) en parallèle avec un écart défini (33),
- peuvent être poussés au moyen du support de pic (3) à travers les mêmes ingrédients (98) avec un écart correspondant d'une ligne de coupelle (12a, b) dans les coupelles respectives des rangs de coupelle adjacentes (8a, b) s'étendant transversalement aux lignes de coupelle (12a, b),
* un dispositif ce contrôle (5) réglant les mouvements relatifs des composants mobiles
**caractérisé en ce que**
* l'orifice de passage (32) est adaptée de sorte que le pic (99) peut, venant du haut, passer à travers l'ingrédient et l'orifice de passage (32).

2. Machine à chachlyk pour produire des brochettes chachlyk (100) avec un nombre et un ordre définis d'ingrédients (98) sur le pic (99), avec
- un module d'ingrédients (1),
- au moins un support de pic (3),
- un dispositif de contrôle (5),
selon la revendication 1,
**caractérisé en ce que**
le module d'ingrédients (1)
- comprend un tapis de coupelles (7) arrangé environ de manière horizontal, en une ou plusieurs pièces, infini ou fini, comprenant des rangs de coupelles (8a, b) arrangés en parallèle et s'étendant dans un premier sens (10) et des lignes de coupelles (12a, b) arrangées perpendiculairement, chaque rang de coupelles (8a, b) comprenant un nombre de coupelles (6) correspondant au nombre désiré d'ingrédients (98) sur la brochette (100) finie,
- les rangs de coupelles (8a, b) sont arrangés avec un écart défini (33), et
- le tapis de coupelles (7) est mobile dans le sens de l'ordre des rangs de coupelles (8a, b), un deuxième sens, en particulier un sens horizontal (11),
et/ou
le support de brochette élongé (3)
- comprend des logements de brochette (13) arrangés avec un écart défini (33) dans son sens d'extension, où des pics (99) peuvent être supportées à leurs extrémités arrières (99b) dans des positions mutuellement parallèles,
- peut avec son sens d'extension être positionné à travers plusieurs rangs de coupelles (8a, b) et avec un pic (99) respectif au-dessus d'une coupelle (6) et peut, en abaissant les pics supportés (99), les pousser à travers les ingrédients (98) dans les coupelles (6), et
- peut déposer les brochettes chachlyk (100) finies.

3. Machine à chachlyk selon la revendication 2,
**caractérisée en ce que**
le module d'ingrédients
- comprend dans le sens de mouvement (11) du tapis de coupelles (7) à son début un dispositif de remplissage (9) pour remplir les coupelles (6) à partir de réservoirs (14a, b) arrangés côte à côte dans le premier sens (10), c'est-à-dire dans le sens des rangs de coupelles (8a, b), où de leurs sorties uniques respectives (15a, b) les ingrédients tombent toujours exactement dans la coupelle correspondante (6) dans ledit un ou les plusieurs rangs de coupelles (8a, b), et/ou
- le tapis de coupelles (7) monte à partir des sorties (15a, b) et comprend un vibreur qui fait vibrer les coupelles (6) du tapis de coupelles (7) ou un racleur (36) qui poussent les ingrédients (98) excédentaires vers une coupelle (6) vide.

4. Machine à chachlyk selon une des revendications précédentes,
**caractérisée en ce que**
les coupelles (6) comprennent en particulier des dépressions rondes avec des flancs (16) montants en oblique vers le haut extérieur
et/ou
les rangs de coupelles (8a, b) individuels sont adaptés en une pièce et sont attachés en particulier à leurs extrémités à un convoyeur de coupelles (18) qui déplace les rangs de coupelles (8a, b) dans le deuxième sens (11).

5. Machine à chachlyk selon une des revendications précédentes,
**caractérisée en ce que**
le support de pic (3) peut pivoter par au moins 90° autour d'un axe vertical, et/ou
le support de pic (3) comprend des logements de pic (13) qui peuvent être ouverts ou fermés individuellement.

6. Machine à chachlyk selon la revendication 2,
**caractérisée en ce que**
le support de pic (3) comprend un corps de base (19) avec les logements de pic (13) ainsi que particulièrement un dispositif de support (20) déplaçable par rapport au corps de base (19) le long de l'extension des pics (99) pour les pics (99),
le dispositif de support (20) comprenant en particulier deux barres de support (21'a, b) mobiles l'une contre l'autre comme une pince, arrangées le long d'un côté respectif du rang des pics (99)
et/ou
un dispositif de support (20) déplaçable dans le sens transversal du tapis de coupelles (7) le long de guidages (48) est arrangé à la base de la machine, avec des barres de support (21,a, b) qui peuvent être positionnées latéralement contre le rang des pics (99) du support de pic (3).

7. Machine à chachlyk selon une des revendications précédentes,
**caractérisée en ce que**
concernant leur ordre dans les rangs de coupelles (8a, b) les coupelles (6) ne comprennent pas l'ingrédient respectif (98) dans l'ordre désiré des ingrédients (98) sur la brochettes chachlyk (100) future mais qu'il y a plutôt en particulier les mêmes ingrédients (98) dans des lignes de coupelle (12a, b) adjacentes
et/ou
la machine comprend un module de pic (2), avec
- un réservoir de pic (23),
- un séparateur (22), et
- une unité de test (24).

8. Machine à chachlyk selon la revendication 7,
**caractérisée en ce que**
- le séparateur (22) comprend au moins deux disques circulaires (25 a, b, c) espacées circulant autour d'un axe commun horizontal (27) avec des convexités (26) à des endroits alignés de leur circonférence, dans lesquelles un pic peut être placé, la sortie du réservoir de pic (23) étant placée au-dessus de l'axe (27) des disques circulaires (25 a, b, c) près de leur périmètre dudit côté des disques circulaires (25 a, b, c) où les convexités (26) bougent vers le haut, et/ou
- un convoyeur de pic (28) s'éloignant radialement des disques circulaires (25 a, b, c) du séparateur (22) est arrangé au côté de dépôt opposé pour déposer les pics (99).

9. Machine à chachlyk selon la revendication 7,
**caractérisée en ce que**
l'unité de test (24) est une unité de test optique travaillant de préférence sans contact, qui teste au moins la rectitude, en particulier aussi la longueur suffisante des pics (99), et **en ce que** l'unité de test (24) est arrangée dans la région des disques circulaires (25 a, b, c) ou dans la région du convoyeur de pic (28)
et/ou
la machine comprend un module de dépôt (4) avec une région de dépôt (29) pour arranger des emballages, en particulier des barquettes (101), côte á côte pour loger les brochettes chachlyk (100) et **en ce que** la région de dépôt (29) est de préférence adaptée sous forme d'au moins un convoyeur de barquettes (31a, b).

10. Machine à chachlyk selon la revendication 9,
**caractérisée en ce que**
le module de dépôt (4) comprend un distributeur de barquettes (30) pour séparer les barquettes (101) délivrées empilées et pour les déposer dans la région de dépôt (29), en particulier sur le convoyeur de barquettes (31a).

11. Procédé pour produire des brochettes chachlyk (100) avec un nombre et ordre définis d'ingrédients (98) sur le pic (99), en
- enfilant les ingrédients l'un après l'autre sur l'extrémité avant (99a) aigue du pic (99), sous forme de morceaus de viande et de légumes et en les déplaçant vers l'extrémité arrière (99b) du pic (99),
**caractérisé en ce que**
- plusieurs coupelles (6) sont prévues avec respectivement une orifice de passage (32) dans le fond (17) de la dépression,
- une pièce respective d'un ingrédient (98) est prévue dans une coupelle (6),
- un groupe respectif de coupelles (39) avec des coupelles (6) avec les mêmes ingrédients (98) sont présentés sous forme d'un arrangement correspondant aux pics (99) dans le support de pic (3),
- plusieurs pics (99) dans l'arrangement défini sont logés avec leurs extrémités arrières (99b) parallèles dans un support de pic (3) mobile,
- tous les pics (99) supportés sont poussés simultanément par le support de pic (3) à travers les ingrédients (98) dans les coupelles (6) du groupe de coupelles (39),
et
- cette opération est répétée plusieurs fois avec plusieurs groupes de coupelles (39) comprenant les ingrédients (98) à mettre sur le pic (99) l'un après l'autre.

12. Procédé selon la revendication 11,
**caractérisé en ce que**
- un rang (8a, b) de coupelles (6) respectif comprend dans un premier sens horizontal (10) tous les ingrédients pour une brochettes chachlyk (100),
- dans un deuxième sens (11), en particulier horizontal, plusieurs rangs de coupelles (8a, b) sont prévus espacés (33) l'un après l'autre et mobiles dans le deuxième sens (11),
- dans le support de pic (3) plusieurs pics (99) sont logés dans un rang avec un écart (33) correspondant à l'écart (33) des rangs de coupelles (8a, b),
- le support de pic (3) élongé est arrangé avec son sens d'extension perpendiculaire au sens d'extension (10) des rangs de coupelles (8a, b) pour l'enfilement.

13. Procédé selon la revendication 12,
**caractérisé en ce que**
lors de l'enfilement, le tapis de coupelles (7) comprenant les rangs de coupelles (8a, b) et les lignes de coupelles (12a, b) perpendiculaires ne bouge pas.

14. Procédé selon une des revendications précédentes 11 à 13,
**caractérisé en ce que**
les pics (99) logés avec leurs extrémité arrière (99b) dans un logement de pic (13 a, b) respectif sont au moins pendant l'enfilement des ingrédients (98) supportés latéralement vers l'avant dans le sens transversal des pics (99)
et/ou
lors de l'enfilement des ingrédients (98) les pics (99) sont supportés directement avant la position du dernier ingrédient (98) enfilé et sa position après l'enfilement et **en ce que** le dispositif de support (20) est en particulier supportes latéralement utilisé comme un arrêt pour le premier ingrédient (98) enfilé.

15. Procédé selon une des revendications précédentes 11 à 14,
**caractérisé en ce que**
les coupelles (6) sont remplies automatiquement en laissant tomber les ingrédients (98) des sorties (15a, b) des réservoirs (14a, b) dans les coupelles (6) d'un ou de plusieurs rangs de coupelles (8a, b)
et/ou
les logements de pic (13 a, b) peuvent être ouverts et fermés individuellement et indépendamment dans le support de pic (3).

16. Procédé selon une des revendications précédentes 11 à 15,
**caractérisé en ce que**
après le remplissage, les coupelles (6) sont transportées de façon oblique vers le haut et des ingrédients excédentaires qui ne sont pas positionnés dans une coupelle (6) sont transportés le long de la pente vers le bas vers une coupelle (6) vide
- ou en poussant les ingrédients (98) excédentaires en arrière par un racleur (36), en particulier par des racleurs (36) montés à une tige racleur,
- et/ou par une application de vibrations.

17. Procédé selon une des revendications précédentes 11 à 16,
**caractérisé en ce que**
- les pics (99) sont arrangés sur un depôt de pics avec des écarts (33) correspondant aux écarts (33) des logements de pic (13a, b) dans le support de pic (3) pour être saisis par le support de pic (3) et en particulier
- les pics (99) sont pris individuellement d'un réservoir de pic (23) et sont déposés avec les écarts (33) désirés sur le dépôt de pic, en particulier un convoyeur de pic (28).

18. Procédé selon une des revendications précédentes 11 à 17,
**caractérisé en ce que**
les brochettes chachlyk (100) finies, après leur finissage, sont pris du support de pic (3) et sont déposés dans des emballages, en particulier des barquettes (101), et **en ce qu'**après le remplissage complet des barquettes (101) celles-ci sont positionnées par le support de pic (3) sur un convoyeur
et/ou
**en ce que** les barquettes (101) empilées sont prises individuellement de l'empilement et sont arrangées côte à côte dans une région de dépôt (29) pour recevoir les brochettes chachlyk (100) finies.
